(19) Europäisches Patentamt
European Patent Office
Office européen des brevets

(11) **EP 4 384 569 B1**

(12) **EUROPEAN PATENT SPECIFICATION**

(45) Date of publication and mention of the grant of the patent:
**29.07.2026 Bulletin 2026/31**

(21) Application number: **22764504.1**

(22) Date of filing: **08.08.2022**

(51) International Patent Classification (IPC):
***C08G 77/12*** *(2006.01)* ***C08G 77/20*** *(2006.01)*
***C08J 9/12*** *(2006.01)* ***C08J 9/30*** *(2006.01)*

(52) Cooperative Patent Classification (CPC):
(C-Sets available)
**C08J 9/12; C08J 9/122; C08J 9/30;** C08G 77/12; C08G 77/20; C08J 2201/022; C08J 2201/026; C08J 2203/06; C08J 2383/05; C08J 2383/07
(Cont.)

(86) International application number:
**PCT/US2022/039669**

(87) International publication number:
**WO 2023/018632 (16.02.2023 Gazette 2023/07)**

(54) **THE PREPARATION OF FOAMED SILICONE PRODUCTS**
HERSTELLUNG VON GESCHÄUMTEN SILIKONPRODUKTEN
PRÉPARATION DE PRODUITS DE SILICONE EXPANSÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.08.2021 US 202163231804 P**

(43) Date of publication of application:
**19.06.2024 Bulletin 2024/25**

(73) Proprietors:
- **Dow Global Technologies LLC**
  **Midland, MI 48674 (US)**
- **Dow Silicones Corporation**
  **Midland, Michigan 48686 (US)**

(72) Inventors:
- **PATANKAR, Kshitish A.**
  **Midland, Michigan 48667 (US)**
- **NG, Sze-Sze**
  **Midland, Michigan 48686-0994 (US)**
- **MATTSON, Kaila**
  **Midland, Michigan 48640 (US)**
- **MORLEY, Timothy**
  **Midland, Michigan 48640 (US)**
- **HENNING, Jody J.**
  **Midland, Michigan 48667 (US)**
- **PAULIK, Nicholas A.**
  **Midland, Michigan 48667 (US)**
- **KINSMAN, Chris**
  **Midland, Michigan 48640 (US)**
- **HUKKANNEN, Eric J.**
  **Andover, Massachusetts 01810 (US)**
- **SCHLADER, David R.**
  **Midland, Michigan 48642 (US)**

(74) Representative: **Murgitroyd & Company**
**165-169 Scotland Street**
**Glasgow G5 8PL (GB)**

(56) References cited:
**EP-A1- 0 691 365** **WO-A1-2020/028299**
**WO-A1-2021/158579** **US-A- 5 436 274**
**US-A- 5 574 073** **US-A- 5 744 507**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 83/04, C08L 83/00, C08K 5/56, C08K 3/36, C08K 3/22, C08K 3/04, C08K 5/5425;**
**C08L 83/04, C08L 83/00, C08K 5/56, C08K 3/36, C08L 83/00, C08L 83/00**

## Description

This disclosure relates to continuous methods for making foamed silicone products using at least one blowing agent which is a non-flammable and/or inert gas at 0°C (zero °C) and atmospheric pressure (approximately 101,325 Pa), multiple-part silicone foam compositions used for forming foamed silicone products in said methods, and the resulting foamed silicone product formed from such compositions. Silicone foams are used for a wide variety of applications. Historically, they were particularly used in space filling applications including sealing and gasketing such as cure-in-place type gaskets. However, they are becoming increasingly attractive for a plethora of other applications, not least automotive applications because of their physical properties compared to conventional foams, including, for the sake of example, reduced weight, lowered density, increased thermal resistance, increased stability, etc. and the ability to be foamed at room temperature or thereabouts, which is useful for temperature sensitive applications.

Examples of suitable automotive applications for which silicone foams may be used include seat cushions, under the hood noise vibration harshness (NVH) insulation applications, door insulation applications and in particular to at least partially cover or encapsulate articles, such as batteries and other electronic components, e.g. for electric vehicle (EV) applications e.g. functioning as barriers between cells for thermal and electrical insulation, and to minimize propagation of thermal events, for thermal insulation, as a fire block. provide compressible support between Lithium-ion battery cells and provide improved flame retardance for e.g., electric vehicle (EV) applications. Lithium-ion batteries, unlike rechargeable batteries with water-based electrolytes, have a potentially hazardous pressurised flammable liquid electrolyte, and require strict safety precautions.

Given the above, it would be attractive to use such silicone foams as pottants to fill large cavities between adjacent battery cells in an EV battery module. EV battery packs can comprise several modules and each module can hold hundreds or even thousands of Lithium-ion battery cells in each module. As an example, a standard 21700 Lithium-ion battery cell has a 21 mm diameter and height of 70 mm. Large cavities can be a challenge to fill as material needs to travel long distance in all directions prior to cure. Not only is the potential travel path long, but material may also need to pass through one or more narrow gaps between e.g., adjacent cylindrical batteries (typically less than 2 mm) as it flows. This type of cavity is very different from cure-in-place type gasket, in which bead size is much smaller, often < 2 cm, and aren't typically required to travel through narrow gaps.

Silicone foam compositions are almost exclusively provided as two-part compositions, which after mixing, are designed to cure with simultaneous gas generation which causes the resulting mixture to foam during the cure process. Historically gas generation has been achieved through the use of chemical blowing agents and more recently physical blowing agents.

In the case of chemical blowing agents, the gas produced has usually been hydrogen, which is a product of a catalysed dehydrocondensation reaction between compounds having silicon bonded hydrogen (Si-H) groups and hydroxyl-functional components. Originally, the reaction relied upon to generate hydrogen was between a silicone polymer having an average of two or more -OH groups and a silicone polymer having an average of two or more silicon bonded hydrogen (Si-H) groups catalysed with a tin catalyst. Whilst this resulted in the formation of Si - O - Si bonds and the release of hydrogen gas (i.e., a chemical foaming agent) which caused foaming, this process became unpopular because some of the preferred catalysts were believed to have undesirable toxic effects.

Increasingly therefore, the majority of current RTV silicone foam compositions are now prepared utilizing platinum group metal-based catalysts, mainly platinum-based catalysts, that catalyze both the hydrosilylation cure process of the composition and/or a dehydrocondensation reaction process between compounds containing Si-H groups and compounds containing -OH groups, again generating hydrogen gas which is consequently used as the means of foaming the composition.

However, the continued reliance on flammable hydrogen gas in the foaming process, raises potential safety concerns for users, particularly in confined spaces such as EV battery packs as this poses a potential explosive hazard when present at concentrations between the lower and upper explosion limits (LEL and UEL) in an environment where sparks and/or high heat exist is potentially hazardous. Furthermore, the sources for the hydroxy groups used to generate hydrogen are in recent times increasingly small organic alcohols such as benzyl alcohol and/or propanol. Many of these alcohols or the like or their by-products resulting from the generation of the hydrogen gas are eye irritants, in some cases flammable and may result in the release of volatile organic compounds (VOCs). Furthermore, their presence in silicone foam compositions is at the expense of other ingredients, i.e., they are present in the composition at the expense thermal insulation / fire resistance additives.

Physical blowing agents are used as alternatives to or in addition to chemical blowing agents. Physical blowing agents are compounds which undergo a liquid to gas phase change at atmospheric pressure and a suitable temperature typically greater than or equal to (≥) at least 10°C, alternatively ≥ 20 °C. Typically such physical blowing agents are selected for use in view of their boiling points as the desired phase change temperature is usually sought to be approximately the composition cure temperature or slightly thereunder. Typically, the most commonly used physical blowing agents are low boiling point hydrocarbons such as isobutane, pentane, propane and halogenated carbons. However, not all such physical

blowing agents are necessarily preferential over hydrogen as many are flammable or even explosive in the gaseous state and the likes of fluorocarbons are environmentally problematic.

Alternate blowing mechanisms utilised to form silicone foams have involved, for the sake of example, the application of heat to facilitate foaming, the use of vacuum, steam and the use of expandable beads, none of which have proved satisfactory.

Given the above, the use of at least one non-flammable and/or inert gas (i.e., non-flammable, inert or non-flammable and inert) at 0°C (zero °C) and atmospheric pressure (approximately 101,325 Pa) such as air, carbon dioxide, nitrogen and/or mixtures thereof is an attractive proposition. Hence, the gases used herein, at atmospheric pressure, do not undergo phase change at temperatures > 0 °C because the gases are already in a gaseous state at 0 °C, unlike most of the physical blowing agents previously utilised, any of which are flammable.

For the avoidance of doubt with respect to the disclosure herein a combustible gas is a gas that can combust (burn) in air; a flammable gas is a combustible gas that can ignite easily at ambient temperatures on exposure to a flame. Hence, air, compressed air and oxygen are, for the sake of this disclosure, non-flammable on their own even though they may act as oxidants and aid combustion with combustible gases. Flammable gases like hydrogen and some of the previously proposed physical blowing agents can be explosive when mixed with air in the right proportion. Any such flammable gases especially those considered potentially explosive under normal use such as hydrogen are excluded from use herein. Inert gases are not combustible, these include, for the sake of example the aforementioned carbon dioxide and nitrogen as well as most of the noble gases e.g., helium.

It would seem to be advantageous to use at least one non-flammable and/or inert gas (i.e., non-flammable, inert or non-flammable and inert) at 0°C (zero °C) and atmospheric pressure (approximately 101,325 Pa) such as air, carbon dioxide, nitrogen and/or mixtures thereof as blowing agent(s) when preparing silicone foam for applications such as lithium-ion battery applications for e.g., EVs. However, previous efforts using such gases have proven to be fraught with problems such as the need for long cure times, the need to heat cure, the need for high operating pressures e.g., to reach supercritical conditions and the inability of the resulting compositions to flow and be preferably self-leveling around large cavities with obstacles. Furthermore, whilst there have been proposals of multi-step processes using such gases these have proven not to be suitable for continuous manufacturing because they failed to address the requirement for fast dispensing of curable silicone foaming mixture into large cavity in a manufacturing, mass production environment. For example, WO2020028299A1 discloses the use of static mixing and dispensing of the physically and chemically blown silicone foams but this process is effectively a batch process, in which components are combined and allowed to statically mix for a time and then are later dispensed, which method cannot be scaled up to run a continuous foam dispensing operation.

US 5 574 073, US 5 744 507, US 5 436 274 and EP 0 691 365 disclose foamed silicone elastomers and their application in e.g. automotive applications.

Previously disclosed examples of static mixing rely of a physical blowing agent in contact with the reaction mixture (initially prepared in two parts, referred to as part A and part B for a certain period of time until saturation of the blowing agent in the polymer;

In view of the foregoing, there remains an opportunity to provide a continuous method for forming hydrosilylation cured silicone foam materials from multiple-part silicone foam compositions comprising at least one non-flammable and/or inert gas (i.e. non-flammable, inert or non-flammable and inert) at 0°C (zero °C) and atmospheric pressure (approximately 101,325 Pa) such as air, carbon dioxide, nitrogen and/or mixtures thereof as blowing agent(s) when preparing silicone foam for applications such as lithium-ion battery applications.

This disclosure relates to a continuous method for forming a foamed silicone product from a multiple-part silicone foam composition comprising the following components:

i) at least one polydiorganosiloxane having a viscosity of from 500 to 75,000mPa.s at 25°C and at least two unsaturated groups per molecule which unsaturated groups are selected from alkenyl groups, alkynyl groups or a mixture thereof;

ii) an organohydrogensiloxane having at least two, alternatively at least three silicon-bonded hydrogen atoms per molecule; iii) a hydrosilylation catalyst;

wherein the multiple-part silicone foam composition comprises a part A composition comprising components (i) and (iii) and a part B composition comprising components (i) and (ii); and wherein each of part A and part B compositions has a viscosity of from 200 to 50,000mPa.s at 25°C; which method comprises the steps of

(a) introducing a part A composition and a Part B composition into respective mixing containers and mixing;

(b) transporting the part A and part B compositions of step (a) respectively via a pumping means at a pre-determined rate to a dispensing valve means;

(c) simultaneously transporting a gaseous blowing agent comprising at least one non-flammable and/or inert gas (i.e.,

non-flammable, inert or non-flammable and inert) which is gaseous at 0°C (zero °C) and atmospheric pressure via a metering gas valve at a pre-determined rate to said dispensing valve means;

(d) transporting said part A composition through a first dispensing valve means at said predefined rate whilst introducing said gaseous blowing agent therein to form a part A composition pressurised with said blowing agent;

(e) simultaneously with step (d) transporting said part B composition through a second said dispensing valve means at said predefined rate whilst introducing said gaseous blowing agent therein to form a part B composition pressurised with said blowing agent;

(f) transporting the products of steps (d) and (e) into a dynamic mixer at the predefined mixing rate and thereby mixing the part A composition pressurised with said blowing agent with the part B pressurised with said blowing agent causing foaming to form a foaming curable mixture of the part A and part B compositions therein; and

(g) dispensing the resulting curable mixture of step (f) to flow onto or into a desired target and allowing said foaming curable mixture to cure to a cured silicone foam product.

Preferably, the resulting foam is subsequently cured at a temperature of between room temperature (i.e., 20°C to 25°C, alternatively 23°C to 25°C) and 50°C.

In one embodiment, no physical blowing agent which undergoes a liquid to gas phase change at atmospheric pressure and a suitable temperature typically greater than or equal to at least 10°C, or chemical blowing agent is utilised as part of the blowing agent. Preferably, the silicone foam composition dispensed is sufficiently flowable before the curable mixture completely cures to fill a large cavity i.e., a cavity in which the ratio of the largest dimension (e.g., width or height or length or diameter) of the cavity to the diameter of the mixer outlet is greater than (>) 10 : 1, alternatively > 5 : 1, alternatively > than 3 : 1. Preferably the silicone foam composition dispensed is therefore self-levelling. For the avoidance of doubt by self-levelling we mean it can flow into small gaps e.g., gaps between adjacent batteries irrespective of the geometry thereof and is able to completely fill all gaps between said batteries prior to and/or during foaming and cure to form thermally insulation filling all voids between adjacent batteries.

The silicone foam composition, once dispensed, may have any suitable gel time dependent on the application for which it is to be used. The gel time may be as little as 60 seconds or even less for uses requiring fast curing but when relying on the ability to flow and self-level longer gel times may be required e.g., 2 minutes or longer, e.g., a range of 2 to 5 minutes may be optimum to enable the dispensed foam to flow and self-level through narrow cracks before curing. Preferably, the silicone foam composition once dispensed has a gel time of greater than or equal to (≥) 120 seconds. For the avoidance of doubt, where the gel time is defined as the time at which the gel point is reached i.e., when storage modulus G' and the loss modulus G" coincide. The value of G"/G' is sometimes referred to as tan $\delta$ and the gel point is to be understood to be when tan $\delta$ = G"/G' = 1. The measurements of G' and G" may be determined by taking measurements using a suitable Rheometer e.g., an ARES G2 rheometer from TA Instruments, equipped with a disposable aluminum 25mm diameter rotational plate and 100Pa stress was used at 25°C. The sample was then dispensed onto the 25mm plate and a top plate brought down to about ~ 1mm to start the measurement.

The part A composition does not include any of component (ii) and the part B composition does not include any of component (iii) in order to avoid premature curing and foam formation prior to step (d). This disclosure also relates to a foamed silicone product which may be elastomeric. As alluded to above, the foamed silicone product comprises the reaction product of the multiple-part silicone foam composition. In various embodiments, the foam comprises the reaction product of components (i) and (ii) in the presence of component (iii). The foamed silicone product may also be formed in the presence of one or more optional additives. Such additives, if utilized, may be inert to, or reactive with, other components of the multiple-part silicone foam composition.

All viscosity measurements referred to herein were measured at 25°C unless otherwise indicated. Viscosity can be determined via methods understood in the art.

The term "substituted" as used in relation to another group, e.g., a hydrocarbyl group, means, unless indicated otherwise, one or more hydrogen atoms in the hydrocarbyl group has been replaced with another substituent. Examples of such substituents include, for example, halogen atoms such as chlorine, fluorine, bromine, and iodine; halogen atom containing groups such as chloromethyl, perfluorobutyl, trifluoroethyl, and nonafluorohexyl; oxygen atoms; oxygen atom containing groups such as (meth)acrylic and carboxyl; nitrogen atoms; nitrogen atom containing groups such as amines, amino-functional groups, amido-functional groups, and cyano-functional groups; sulphur atoms; and sulphur atom containing groups such as mercapto groups.

The components of the Composition:

**Component (i)**

Component (i) is at least one polydiorganosiloxane having a viscosity of from 500 to 75,000mPa.s at 25°C and at least two unsaturated groups per molecule which unsaturated groups are selected from alkenyl groups, alkynyl groups or a mixture thereof.

Hence, each polydiorganosiloxane of component (i) comprises multiple siloxy units, of formula (I):

$$R'_aSiO_{(4-a)/2} \qquad (I)$$

In which subscript "a" is 0, 1, 2 or 3.

Siloxy units may be described by a shorthand (abbreviated) nomenclature, namely - "M," "D," "T," and "Q", when R' is as described above, alternatively an alkyl group, typically a methyl group (further teaching on silicone nomenclature may be found in Walter Noll, Chemistry and Technology of Silicones, dated 1962, Chapter I, pages 1-9). The M unit corresponds to a siloxy unit where a = 3, that is $R'_3SiO_{1/2}$; the D unit corresponds to a siloxy unit where a = 2, namely $R'_2SiO_{2/2}$; the T unit corresponds to a siloxy unit where a = 1, namely $R'_1SiO_{3/2}$; the Q unit corresponds to a siloxy unit where a = 0, namely $SiO_{4/2}$. A polyorganosiloxane such as a polydiorganosiloxane of component (i) is substantially linear but may contain a proportion of branching due to the presence of T units (as previously described) within the molecule, hence the average value of a in structure (I) is about 2.

The unsaturated groups of component (i) may be positioned either terminally or pendently on the polydiorganosiloxane, or in both locations. The unsaturated groups of component (i) may be alkenyl groups or alkynyl groups or a mixture thereof as described above. Each alkenyl group, when present, may comprise for example from 2 to 30 carbon atoms, alternatively 2 to 24, alternatively 2 to 20, alternatively 2 to 12, alternatively 2 to 10, and alternatively 2 to 6 carbon atoms. When present the alkenyl groups may be exemplified by, but not limited to, vinyl, allyl, meth allyl, propenyl, isopropenyl, hexenyl and cyclohexenyl groups. Each alkynyl group, when present, may also have 2 to 30 carbon atoms, alternatively 2 to 24, alternatively 2 to 20, alternatively 2 to 12, alternatively 2 to 10, and alternatively 2 to 6 carbon atoms. Examples of alkynyl groups may be exemplified by, but not limited to, ethynyl, propynyl, and butynyl groups. Preferred examples of the unsaturated groups of component (i) include vinyl, isopropenyl, allyl, and hexenyl.

In formula (I), each R', other than the unsaturated groups described above, is independently selected from an aliphatic hydrocarbyl group, a substituted aliphatic hydrocarbyl group, an aromatic group or a substituted aromatic group. Each aliphatic hydrocarbyl group may be exemplified by, but not limited to, alkyl groups having from 1 to 20 carbons per group, alternatively 1 to 15 carbons per group, alternatively 1 to 12 carbons per group, alternatively 1 to 10 carbons per group, alternatively 1 to 6 carbons per group or cycloalkyl groups such as cyclohexyl. Specific examples of alkyl groups may include methyl, ethyl, propyl, pentyl, octyl, undecyl, and octadecyl groups, alternatively methyl and ethyl groups. Substituted aliphatic hydrocarbyl group are preferably non-halogenated substituted alkyl groups.

The aliphatic non-halogenated organyl groups are exemplified by, but not limited to alkyl groups as described above with a substituted group such as suitable nitrogen containing groups such as amido groups, imido groups; oxygen containing groups such as polyoxyalkylene groups, carbonyl groups, alkoxy groups and hydroxyl groups. Further organyl groups may include sulfur containing groups, phosphorus containing groups, boron containing groups. Examples of aromatic groups or substituted aromatic groups are phenyl groups and substituted phenyl groups with substituted groups as described above.

Component (i) may be selected from polydimethylsiloxanes, alkylmethylpolysiloxanes, alkylarylpolysiloxanes or copolymers thereof (where reference to alkyl means any suitable alkyl group, alternatively an alkyl group having two or more carbons) providing each polymer contains at least two unsaturated groups as described above, typically alkenyl groups as described above having a viscosity of from 500 to 75,000mPa.s at 25°C They may for example be trialkyl terminated, alkenyldialkyl terminated alkynyldialkyl terminated or may be terminated with any other suitable terminal group combination providing each polymer contains the required at least two unsaturated groups per molecule and having a viscosity of from 500 to 75,000mPa.s at 25°C.

Hence component (i) may, for the sake of example, be:

a dialkylalkenyl terminated polydimethylsiloxane, e.g. dimethylvinyl terminated polydimethylsiloxane; a dialkylalkenyl terminated dimethylmethylphenylsiloxane, e.g. dimethylvinyl terminated dimethylmethylphenylsiloxane; a trialkyl terminated dimethylmethylvinyl polysiloxane; a dialkylvinyl terminated dimethylmethylvinyl polysiloxane copolymer; a dialkylvinyl terminated methylphenylpolysiloxane, a dialkylalkenyl terminated methylvinylmethylphenylsiloxane; a dialkylalkenyl terminated methylvinyldiphenylsiloxane; a dialkylalkenyl terminated methylvinyl methylphenyl dimethylsiloxane; a trimethyl terminated methylvinyl methylphenylsiloxane; a trimethyl terminated methylvinyl diphenylsiloxane; or a trimethyl terminated methylvinyl methylphenyl dimethylsiloxane.

In each case component (i) has a having a viscosity of from 500 to 75,000mPa.s at 25°C, alternatively a viscosity of from 500 to 50,000mPa.s at 25°C, alternatively from 500 to 30,000mPa.s at 25°C, alternatively from 500 to 20,000mPa.s at 25°C, alternatively 500 to 10,000mPa.s at 25°C.

the viscosity may be measured using suitable standard equipment for the purpose, such as a Brookfield™ CAP 2000+ viscometer, with spindle LV-4 (designed for viscosities in the range between 1,000-2,000,000 mPa.s) or a Brookfield™ CAP 2000+ viscometer, with spindle LV-1 (designed for viscosities in the range between 15 -20,000 mPa.s) for viscosities less than 1000 mPa.s and adapting the shear rate according to the polymer viscosity. All viscosity values are given based on a value at 25°C unless otherwise indicated.

Typically the alkenyl and/or alkynyl content, e.g. vinyl content of the polymer is from 0.01 to 3 wt. % for each polydiorganosiloxane containing at least two silicon-bonded alkenyl groups per molecule of component (i), alternatively from 0.025 to 2.5 wt. % of component (i), alternatively from 0.025 to 2.0 wt. % of the or each polydiorganosiloxane containing at least two silicon-bonded alkenyl groups per molecule of component (i), as determined using quantitative infra-red analysis in accordance with ASTM E168.

Component (i) of the part A composition may be the same but may be different from the component (i) of the part B composition, providing in each case component (i) polydiorganosiloxane has a viscosity of from 500 to 75,000mPa.s at 25°C and said at least two unsaturated groups per molecule and providing each of part A and part B composition has a viscosity of from 200 to 50,000mPa.s at 25°C, alternatively, 500 to 50,000mPa.s at 25°C, alternatively from 500 to 30,000mPa.s at 25°C, alternatively from 500 to 20,000mPa.s at 25°C, alternatively 500 to 10,000mPa.s at 25°C.

Component (i) is present in the part A composition in an amount of from 1 to about 99 wt. %, alternatively 30 to about99 wt. %, alternatively 50 to about 99 wt. % of the part A composition; Component (i) is present in the part B composition in an amount of from 1 to about 99 wt. %, alternatively 30 to about 99 wt. %, alternatively 50 to about 99 wt. % of the composition; and Component (i) is present in the total composition when parts A and B are mixed together in an amount of from 1 to about 99 wt. %, alternatively 30 to about 99 wt. %, alternatively 50 to about 99 wt. % of the composition.

**Component (ii)**

Component (ii) is a cross-linker in the form of an organohydrogensiloxane having at least two, alternatively at least three silicon-bonded hydrogen atoms per molecule. Component (ii) normally contains three or more silicon-bonded hydrogen atoms so that the hydrogen atoms can react with the unsaturated alkenyl and/or alkynyl groups of component (i) to form a network structure therewith and thereby cure the silicone foam composition. Some or all of Component (ii) may alternatively have two silicon bonded hydrogen atoms per molecule when component (i) has greater than two unsaturated groups per molecule.

The molecular configuration of the organohydrogensiloxane having at least two, alternatively at least three silicon-bonded hydrogen atoms per molecule is not specifically restricted, and it can be a straight chain, branched (a straight chain with some branching through the presence of T groups), cyclic or silicone resin based.

While the molecular weight of component (ii) is not specifically restricted, the viscosity is typically from 15 to 50,000 mPa.s at 25°C relying on either a Brookfield™ CAP 2000+ viscometer, with spindle LV-4 (designed for viscosities in the range between 1,000-2,000,000 mPa.s) or a Brookfield™ CAP 2000+ viscometer, with spindle LV-1 (designed for viscosities in the range between 15 -20,000 mPa.s) for viscosities less than 1000 mPa.s and adapting the shear rate according to the polymer viscosity, in order to obtain a good miscibility with component (i).

Silicon-bonded organic groups used in component (ii) may be exemplified by alkyl groups such as methyl, ethyl, propyl, n-butyl, t-butyl, pentyl, hexyl; aryl groups such as phenyl tolyl, xylyl, or similar aryl groups; 3-chloropropyl, 3,3,3-trifluoropropyl, or similar halogenated alkyl group, preferred alkyl groups having from 1 to 6 carbons, especially methyl ethyl or propyl groups or phenyl groups. Preferably the silicon-bonded organic groups used in component (ii) are alkyl groups, alternatively methyl, ethyl or propyl groups.

Examples of the organohydrogensiloxane having at least two, alternatively at least three silicon-bonded hydrogen atoms per molecule of component (ii) include but are not limited to:

(a) trimethylsiloxy-terminated methylhydrogenpolysiloxane,
(b) trimethylsiloxy-terminated polydimethylsiloxane-methylhydrogensiloxane,
(c) dimethylhydrogensiloxy-terminated dimethylsiloxane-methylhydrogensiloxane copolymers,
(d) dimethylsiloxane-methylhydrogensiloxane cyclic copolymers,
(e) copolymers and/or silicon resins consisting of $(CH_3)_2HSiO_{1/2}$ units, $(CH_3)_3SiO_{1/2}$ units and $SiO_{4/2}$ units,
(f) copolymers and/or silicone resins consisting of $(CH_3)_2HSiO_{1/2}$ units and $SiO_{4/2}$ units,
(g) Methylhydrogensiloxane cyclic homopolymers having between 3 and 10 silicon atoms per molecule;

alternatively, component (ii), the cross-linker, may be a filler, e.g., silica treated with one of the above, and mixtures thereof.

In one embodiment the Component (ii) is selected from a methylhydrogenpolysiloxane capped at both molecular terminals with trimethylsiloxy groups; a copolymer of a methylhydrogensiloxane and a dimethylsiloxane capped at both molecular terminals with trimethylsiloxy groups; dimethylsiloxane capped at both molecular terminals with dimethylhydrogensiloxy groups; a copolymer of a methylhydrogensiloxane and a dimethylsiloxane capped at both molecular terminals with dimethylhydrogensiloxy groups.

The organohydrogensiloxane having at least two, alternatively at least 3 silicon-bonded hydrogen atoms per molecule of component (ii) is generally present in the multiple-part silicone foam composition (i.e. after part A and part B have been mixed together) such that the molar ratio of the total number of the silicon-bonded hydrogen atoms in component (ii) to the total number of alkenyl and/or alkynyl groups in component (i) is from 0.5:1 to 20:1. When this ratio is

less than 0.5:1, a well-cured composition will not be obtained. When the ratio exceeds 20:1, there is a tendency for the hardness of the cured composition to increase when heated. Preferably in an amount such that the molar ratio of silicon-bonded hydrogen atoms of component (ii) to alkenyl/alkynyl groups, alternatively alkenyl groups of component (i) ranges from 0.7 : 1.0 to 5.0 : 1.0, preferably from 0.9 : 1.0 to 2.5 : 1.0, and most preferably from 0.9 : 1.0 to 2.0 : 1.0.

The silicon-bonded hydrogen (Si-H) content of component (ii) is determined using quantitative infra-red analysis in accordance with ASTM E168. In the present instance the silicon-bonded hydrogen to alkenyl (vinyl) and/or alkynyl ratio is important when relying on a hydrosilylation cure process. Generally, this is determined by calculating the total weight % of alkenyl groups in the multiple-part silicone foam composition, e.g., vinyl [V] and the total weight % of silicon bonded hydrogen [H] in the composition and given the molecular weight of hydrogen is 1 and of vinyl is 27 the molar ratio of silicon bonded hydrogen to vinyl is 27[H]/[V].

Typically, dependent on the number of unsaturated groups in component (i) and the number of Si-H groups in component (ii), component (ii) will be present in an amount of from 0.1 to 10 wt. % of the silicone foam composition, alternatively 0.1 to 7.5wt. % of the silicone foam composition, alternatively 0.5 to 7.5wt. %, further alternatively from 0.5% to 5 wt. % of the silicone foam composition. Component (iii) of the multiple-part silicone foam composition, is a hydrosilylation catalyst comprising or consisting of a platinum group metal or a compound thereof. These are usually selected from catalysts of the platinum group of metals (platinum, ruthenium, osmium, rhodium, iridium and palladium), or a compound of one or more of such metals. Alternatively, platinum and rhodium compounds are preferred due to the high activity level of these catalysts in hydrosilylation reactions, with platinum compounds most preferred. In a hydrosilylation (or addition) reaction, a hydrosilylation catalyst such as component (iii) herein catalyses the reaction between an unsaturated group, usually an alkenyl group e.g., vinyl with Si-H groups.

The hydrosilylation catalyst of component (iii) can be a platinum group metal, a platinum group metal deposited on a carrier, such as activated carbon, metal oxides, such as aluminum oxide or silicon dioxide, silica gel or powdered charcoal, or a compound or complex of a platinum group metal. Preferably the platinum group metal is platinum.

Examples of preferred hydrosilylation catalysts of component (iii) are platinum based catalysts, for example, platinum black, platinum oxide (Adams catalyst), platinum on various solid supports, chloroplatinic acids, e.g. hexachloroplatinic acid (Pt oxidation state IV) (Speier catalyst), chloroplatinic acid in solutions of alcohols e.g. isooctanol or amyl alcohol (Lamoreaux catalyst), and complexes of chloroplatinic acid with ethylenically unsaturated compounds such as olefins and organosiloxanes containing ethylenically unsaturated silicon-bonded hydrocarbon groups, e.g. tetra-vinyl-tetramethylcyclotetrasiloxane-platinum complex (Ashby catalyst). Soluble platinum compounds that can be used include, for example, the platinum-olefin complexes of the formulae $(PtCl_2.(olefin)_2$ and $H(PtCl_3.olefin)$, preference being given in this context to the use of alkenes having 2 to 8 carbon atoms, such as ethylene, propylene, isomers of butene and of octene, or cycloalkanes having 5 to 7 carbon atoms, such as cyclopentene, cyclohexene, and cycloheptene. Other soluble platinum catalysts are, for the sake of example a platinum-cyclopropane complex of the formula $(PtCl_2C_3H_6)_2$, the reaction products of hexachloroplatinic acid with alcohols, ethers, and aldehydes or mixtures thereof, or the reaction product of hexachloroplatinic acid and/or its conversion products with vinyl-containing siloxanes such as methylvinylcyclotetrasiloxane in the presence of sodium bicarbonate in ethanolic solution. Platinum catalysts with phosphorus, sulfur, and amine ligands can be used as well, e.g. $(Ph_3P)_2PtCl_2$; and complexes of platinum with vinylsiloxanes, such as sym-divinyltetramethyldisiloxane.

Hence, specific examples of suitable platinum-based catalysts of component (iii) include

(i) complexes of chloroplatinic acid with organosiloxanes containing ethylenically unsaturated hydrocarbon groups are described in US 3,419,593;

(ii) chloroplatinic acid, either in hexahydrate form or anhydrous form;

(b) a platinum-containing catalyst which is obtained by a method comprising reacting chloroplatinic acid with an aliphatically unsaturated organosilicon compound, such as divinyltetramethyldisiloxane;

(iv) alkene-platinum-silyl complexes as described in US Pat. No. 6,605,734 such as $(COD)Pt(SiMeCl_2)_2$ where "COD" is 1,5-cyclooctadiene; and/or

(v) Karstedt's catalyst, a platinum divinyl tetramethyl disiloxane complex typically containing about 1 wt. % of platinum typically in a vinyl siloxane polymer. Solvents such as toluene and the like organic solvents have been used historically as alternatives but the use of vinyl siloxane polymers by far the preferred choice today. These are described in US3,715,334 and US3,814,730. In one preferred embodiment, component (iii) may be selected from co-ordination compounds of platinum. In one embodiment hexachloroplatinic acid and its conversion products with vinyl-containing siloxanes, Karstedt's catalysts and Speier catalysts are preferred. The catalytic amount of the hydrosilylation catalyst is generally between 0.01 ppm, and 250 parts by weight of platinum-group metal, per million parts (ppm), based on the weight of the mixed part A and part B composition; alternatively, between 0.01 ppm, and 150 ppm, alternatively, between 0.01 ppm, and 100 ppm, alternatively, between 0.01 ppm, and 90 ppm, alternatively, between 0.01 ppm, and 75 ppm alternatively, between 0.01 ppm, and 60 ppm alternatively, between 0.01 ppm, and 50 ppm based on the weight of the mixed part A and part B composition. The ranges may relate solely to the metal content within the catalyst

or to the catalyst altogether (including its ligands) as specified, but typically these ranges relate solely to the metal content within the catalyst. The catalyst may be added as a single species or as a mixture of two or more different species. Typically, dependent on the form/concentration in which the catalyst package is provided (i.e., when contained in a silicone polymer) the amount of catalyst/catalyst mixture present will be within the range of from 0.001 to 3.0 wt. % of the composition, alternatively from 0.001 to 1.5 wt. % of the composition, alternatively from 0.01-1.5 wt. %, alternatively 0.01 to 0.1.0 wt. %, of the composition.

**Blowing agent**

As described above, the blowing agent utilised in the process herein comprises at least one non-flammable and/or inert gas (i.e., non-flammable, inert or non-flammable and inert) at 0°C (zero °C) and atmospheric pressure (approximately 101,325 Pa) such as air, carbon dioxide, nitrogen and/or mixtures thereof. No blowing agents generally referred to as chemical or physical blowing agents (i.e., as hereinbefore described) are involved in the process to create the foam of this disclosure. Preferably the blowing agent utilised is selected from air, carbon dioxide, nitrogen and/or mixtures thereof.

As previously defined, for the avoidance of doubt with respect to the disclosure herein a combustible gas is a gas that can combust (burn) in air; a flammable gas is a combustible gas that can ignite easily at ambient temperatures on exposure to flame. Hence, air, compressed air and oxygen are, for the sake of this disclosure, non-flammable on their own even though they may act as oxidants and aid combustion with combustible gases. Flammable gases like hydrogen and some of the previously proposed physical blowing agents can be explosive when mixed with air in the right proportion. Any such flammable gases especially those considered potentially explosive under normal use such as hydrogen are excluded from use herein. Inert gases are not combustible at all, these include, for the sake of example the aforementioned carbon dioxide and nitrogen as well as most of the noble gases e.g., helium.

**Optional Additive(s)**

The multiple-part silicone foam composition may optionally further comprise additional additives. Such additives may be present in the part A or the part B composition or even both as desired providing said additive does not prevent the multiple-part silicone foam composition from curing and/or foaming during the process described herein. Examples of suitable additives which may be incorporated into the multipart composition include, for the sake of example, hydrosilylation reaction Inhibitors, Resin foam stabilizers, one or more reinforcing or non-reinforcing fillers, fire retardants, thermally conductive fillers, thermally insulative additives, pigments and/or one or more surfactants.

**Optional hydrosilylation reaction inhibitors**

The multiple-part silicone foam composition as described herein may also comprise one or more optional hydrosilylation reaction inhibitors. Hydrosilylation reaction inhibitors are used, when required, to prevent or delay the hydrosilylation reaction curing process especially during storage. The optional hydrosilylation reaction inhibitors of platinum-based catalysts are well known in the art and include hydrazines, triazoles, phosphines, mercaptans, organic nitrogen compounds, acetylenic alcohols, silylated acetylenic alcohols, maleates, fumarates, ethylenically or aromatically unsaturated amides, ethylenically unsaturated isocyanates, olefinic siloxanes, unsaturated hydrocarbon monoesters and diesters, conjugated ene-ynes, hydroperoxides, nitriles, and diaziridines. Alkenyl-substituted siloxanes as described in US3989667 may be used, of which cyclic methylvinylsiloxanes are preferred.

One class of known hydrosilylation reaction inhibitors are the acetylenic compounds disclosed in US3445420. Acetylenic alcohols such as 2-methyl-3-butyn-2-ol constitute a preferred class of inhibitors that will suppress the activity of a platinum-containing catalyst at 25 °C. Compositions containing these inhibitors typically require heating at temperature of 70 °C or above to cure at a practical rate.

Examples of acetylenic alcohols and their derivatives include 1-ethynyl-1-cyclohexanol (ETCH), 2-methyl-3-butyn-2-ol, 3-butyn-1-ol, 3-butyn-2-ol, propargyl alcohol, 1-phenyl-2-propyn-1-ol, 3,5-dimethyl-1-hexyn-3-ol, 1-ethynylcyclopentanol, 3-methyl-1-penten-4-yn-3-ol, and mixtures thereof. Derivatives of acetylenic alcohol may include those compounds having at least one silicon atom.

When present, hydrosilylation reaction inhibitor concentrations may be as low as 1 mole of hydrosilylation reaction inhibitor per mole of the metal of catalyst (iii) will, in some instances, still impart satisfactory storage stability and cure rate. In other instances, hydrosilylation reaction inhibitor concentrations of up to 500 moles of inhibitor per mole of the metal of catalyst are required. The optimum concentration for a given hydrosilylation reaction inhibitor in a given composition is readily determined by routine experimentation. Dependent on the concentration and form in which the hydrosilylation reaction inhibitor selected is provided/available commercially, when present in the composition, the inhibitor is typically present in an amount of from 0.0125 to 10wt. % of the composition.

In one embodiment the inhibitor, when present, is selected from 1-ethynyl-1-cyclohexanol (ETCH) and/or 2-methyl-3-butyn-2-ol and is present in an amount of greater than zero to 0.1 wt. % of the composition.

**Resin foam stabilizer**

The composition may further comprise an organopolysiloxane resin ("resin") as a resin foam stabilizer. The resin has a branched or a three-dimensional network molecular structure. At room temperature, the resinous organopolysiloxane may be in a liquid or in a solid form, optionally dispersed in a carrier, which may solubilize and/or disperse the resin therein.

In specific embodiments, the resinous organopolysiloxane may be exemplified by an organopolysiloxane that comprises only T units, an organopolysiloxane that comprises T units in combination with other siloxy units (e.g., M, D, and/or Q siloxy units), or an organopolysiloxane comprising Q units in combination with other siloxy units (i.e., M, D, and/or T siloxy units). Typically, the resin comprises T and/or Q units. Specific examples are alkenylated silsesquioxanes or MQ resins e.g., vinyl terminated silsesquioxanes or MQ resins.

For example, the resin may be formed from multiple units of formula:

$$R^5_{f''}SiO_{(4-f'')/2}$$

wherein each $R^5$ is a substituted or unsubstituted monovalent hydrocarbon group of 1 to 20 carbon atoms, for example, alkyl groups such as methyl, ethyl, propyl, hexyl, octyl, dodecyl, tetradecyl, hexadecyl, and octadecyl, or an aromatic group having 6 to 20 carbons such as benzyl and phenylethyl groups or alkenyl groups such as vinyl, propenyl, n-butenyl, t-butenyl, pentenyl, hexenyl, octenyl and the like and wherein each f" is from 0 to 3. If the resin is a T resin, then most groups have f" as 1 and if the resin is an MQ resin to largely comprises groups where f" is 0 (Q groups) or 3 (M groups) as previously discussed.

The additional additives may also include reinforcing and/or non-reinforcing (sometimes referred to as extending) fillers. Examples of reinforcing fillers include high surface area fumed and precipitated silicas including rice hull ash and to a degree calcium carbonate. The reinforcing fillers of component (II) may be exemplified by fumed silica colloidal silica and/or precipitated silica and/or suitable silicone resins. Precipitated silica, fumed silica and/or colloidal silicas are particularly preferred because of their relatively high surface area which is typically at least 50 $m^2/g$ (BET method in accordance with ISO 9277: 2010). Fillers having surface areas of from 50 to 450 $m^2/g$ (BET method in accordance with ISO 9277: 2010), alternatively of from 50 to 300 $m^2/g$ (BET method in accordance with ISO 9277: 2010), are typically used. The precipitated silica and/or fumed silica is also preferred because it is finely divided. All these types of silica are commercially available.

Examples of non-reinforcing fillers include crushed quartz, diatomaceous earths, barium sulphate, iron oxide, titanium dioxide and carbon black, talc, and wollastonite. Other fillers which might be used alone or in addition to the above include carbon nanotubes, e.g., multiwall carbon nanotubes aluminite, calcium sulphate (anhydrite), gypsum, calcium sulphate, magnesium carbonate, clays such as kaolin, aluminum trihydroxide, magnesium hydroxide (brucite), graphite, copper carbonate, e.g., malachite, nickel carbonate, e.g., zarachite, barium carbonate, e.g., witherite and/or strontium carbonate e.g., strontianite. Further alternative fillers include aluminum oxide, silicates from the group consisting of olivine group; garnet group; aluminosilicates; ring silicates; chain silicates; and sheet silicates.

The filler, if present, may optionally be surface treated with a hydrophobic treating agent. Treating agents and treating methods are understood in the art. The surface treatment of the filler(s) is typically performed, for example with a fatty acid or a fatty acid ester such as a stearate, or with organosilanes, organosiloxanes, or organosilazanes e.g., hexaalkyl disilazane such as hexamethyldisilazane (HMDZ) or short chain siloxane diols. Generally, the surface treatment renders the filler(s) hydrophobic and therefore easier to handle and obtain a homogeneous mixture with the other components in the composition.

Silanes such as $R^7_eSi(OR^6)_{4-e}$ where $R^7$ is a substituted or unsubstituted monovalent hydrocarbon group of 6 to 20 carbon atoms, for example, alkyl groups such as hexyl, octyl, dodecyl, tetradecyl, hexadecyl, and octadecyl, and aralkyl groups such as benzyl and phenylethyl, $R^6$ is an alkyl group of 1 to 6 carbon atoms, and subscript "e" is equal to 1, 2 or 3, may also be utilized as the treating agent for fillers.

The multiple-part silicone foam composition used in the process described herein may comprise one or more fire retardant fillers selected from the group of wollastonite, aluminium trihydrate, magnesium hydroxide, halloysite, huntite hydromagnesite, expandable graphite, zinc borate, mica or a fumed silica. These will also function as reinforcing or non-reinforcing fillers as described above. Said fire-retardant fillers, when present, may optionally be surface treated with a treating agent of the type described above for reinforcing and non-reinforcing fillers.

**Thermally conductive filler**

The multiple-part silicone foam composition used in the process described herein may comprise at least one thermally conductive filler.

Any suitable thermally conductive fillers may be utilised when required. Examples include:-

metals e.g., bismuth, lead, tin, antimony, indium, cadmium, zinc, silver, copper, nickel, aluminium, iron and silicon metal;
alloys e.g., alloys of one or more of bismuth, lead, tin, antimony, indium, cadmium, zinc, silver, aluminium, iron and/or silicon; for example, Fe-Si alloy, Fe-Al alloy, Fe-Si-Al alloy, Fe-Si-Cr alloy, Fe-Ni alloy, Fe-Ni-Co alloy, Fe-Ni-Mo alloy, Fe -Co alloy, Fe-Si-Al-Cr alloys, Fe-Si-B alloy and Fe-Si-CoB alloy;
ferrites, Mn-Zn ferrite, Mn-Mg-Zn ferrite, Mg-Cu-Zn ferrite, Ni-Zn ferrite, and a Ni-Cu-Zn ferrite and Cu-Zn ferrite;
Metal oxides such as, aluminium oxide (alumina), zinc oxide, silicon oxide, magnesium oxide, beryllium oxide, chromium oxide and titanium oxide;
metal hydroxides such as magnesium hydroxide, aluminium hydroxide, barium hydroxide and calcium hydroxide;
metal nitrides, such as boron nitride include aluminium nitride and silicon nitride;
metal carbides such as silicon carbide, include boron carbide and titanium carbide; and
metal silicides such as magnesium silicide, titanium silicide, silicide, zirconium, tantalum silicide, niobium silicide, chromium silicide, and a tungsten silicide and molybdenum silicide.

**Thermally insulative additive**

Thermally insulative additives may be any suitable additive which can impart low thermal conductivity, to the multiple-part silicone foam composition, typically to improve heat insulation properties of the resulting silicone foam products. These may for the sake of example include aerogels and expanded perlite, calcined clay, mica and hollow microspheres such as glass, polymeric or ceramic, for example, ceramic micro-spheres such as Cenospheres, fly ash and Z-light Spheres™ from 3-M; and/or micro-spheres based on organic polymer composites, such as polymers or copolymers of acrylic materials that may be in dry powder or dispersed in an aqueous carrier (e.g. those sold under the trade mark Rhopaque™ by Rohm and Haas and the Dow Chemical Company, or based on copolymers of vinylidene chloride and acrylonitrile (e.g. Expancel™ by Expancel, Inc.).

**Optional Pigments/Colorants**

The multiple-part silicone foam composition as described herein may further comprise one or more pigments and/or colorants which may be added if desired. The pigments and/or colorants may be coloured, white, black, metal effect, and luminescent e.g., fluorescent and phosphorescent.

Suitable white pigments and/or colorants include titanium dioxide, zinc oxide, lead oxide, zinc sulfide, lithophone, zirconium oxide, and antimony oxide.

Suitable non-white inorganic pigments and/or colorants include, but are not limited to, iron oxide pigments such as goethite, lepidocrocite, hematite, maghemite, and magnetite black iron oxide, yellow iron oxide, brown iron oxide, and red iron oxide; blue iron pigments; chromium oxide pigments; cadmium pigments such as cadmium yellow, cadmium red, and cadmium cinnabar; bismuth pigments such as bismuth vanadate and bismuth vanadate molybdate; mixed metal oxide pigments such as cobalt titanate green; chromate and molybdate pigments such as chromium yellow, molybdate red, and molybdate orange; ultramarine pigments; cobalt oxide pigments; nickel antimony titanates; lead chrome; carbon black; lampblack, and metal effect pigments such as aluminium, copper, copper oxide, bronze, stainless steel, nickel, zinc, and brass.

Suitable organic non-white pigments and/or colorants include phthalocyanine pigments, e.g. phthalocyanine blue and phthalocyanine green; monoarylide yellow, diarylide yellow, benzimidazolone yellow, heterocyclic yellow, DAN orange, quinacridone pigments, e.g. quinacridone magenta and quinacridone violet; organic reds, including metallized azo reds and nonmetallized azo reds and other azo pigments, monoazo pigments, diazo pigments, azo pigment lakes, β-naphthol pigments, naphthol AS pigments, benzimidazolone pigments, diazo condensation pigment, isoindolinone, and isoindoline pigments, polycyclic pigments, perylene and perinone pigments, thioindigo pigments, anthrapyrimidone pigments, flavanthrone pigments, anthanthrone pigments, dioxazine pigments, triarylcarbonium pigments, quinophthalone pigments, and diketopyrrolo pyrrole pigments.

Typically, the pigments and/or colorants, when particulates, have average particle diameters in the range of from 10 nm to 50 μm, preferably in the range of from 40 nm to 2 μm. The pigments and/or colorants when present are present in the range of from 2 wt. %, alternatively from 3 wt. %, alternatively from 5 wt. % of the composition to 20 wt. %, alternatively to 15 wt. % of the composition, alternatively to 10 wt. % of the composition.

## Surfactants

Any suitable surfactant(s) may be utilised in the multiple-part silicone foam composition used in the process described herein. They may, for example, comprise one or more anionic, non-ionic, amphoteric and/or cationic surfactants, and mixtures thereof.

Suitable surfactants (sometimes referred to as "foaming aids") include silicone polyethers, ethylene oxide polymers, propylene oxide polymers, copolymers of ethylene oxide and propylene oxide, and combinations thereof. If/desired the multiple-part silicone foam composition comprises a fluorinated surfactant which may be organic or silicon containing such as perfluorinated polyethers i.e., those which have repeating units of the formulae:

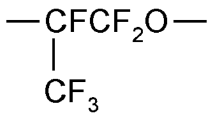

or

$-CF_2CF_2O-$

and mixtures of such units.

Alternatively, the fluorinated surfactant may be a silicon-containing fluorinated surfactant e.g., an organopolysiloxane which contain organic radicals having fluorine bonded thereto, such as siloxanes having repeating units of the formulae:

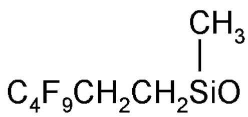

or

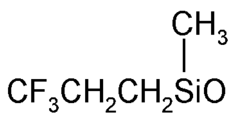

.

Adding the fluorinated surfactant to the composition herein may be utilised to decrease the cured foam specific gravity. In general, increasing the amount of fluorinated surfactant in the composition decreases the specific gravity of the foam. This is especially true for slow cure systems, where the surfactant stabilizes bubbles while the network forms and cures.

Anionic surfactants include alkali metal alkyl sulphates e.g. sodium lauryl sulfate; fatty alcohol ether sulfates (FAES); alkyl phenol ether sulfates (APES); carboxylic, phosphoric and sulfonic acids and their salt derivatives; alkyl carboxylates; acyl lactylates; alkyl ether carboxylates; n-acyl sarcosinate; n-acyl glutamates; fatty acid-polypeptide condensates; alkali metal sulforicinates; sulfonated glycerol esters of fatty acids, such as sulfonated monoglycerides of coconut oil acids; salts of sulfonated monovalent alcohol esters, such as sodium oleylisethionate; amides of amino sulfonic acids, such as the sodium salt of oleyl methyl tauride; sulfonated products of fatty acids nitriles, such as palmitonitrile sulfonate; sulfonated aromatic hydrocarbons, such as sodium alpha-naphthalene monosulfonate; condensation products of naphthalene sulfonic acids with formaldehyde; sodium octahydroanthracene sulfonate; ether sulphates having alkyl groups of 8 or more carbon atoms; alkylarylsulfonates having 1 or more alkyl groups of 8 or more carbon atoms. sodium dodecyl benzene sulfonate, dioctylsulfosuccinate, sodium polyoxyethylene lauryl ether sulfate, diphenyl sulfonate derivatives, e.g., sodium dodecyl diphenyloxide disulfonate and sodium salt of tert-octylphenoxyethoxypoly(39)ethoxyethyl sulfate.

Anionic surfactants which are commercially available and useful herein include, but are not limited to, POLYSTEP™ A4, A7, A11, A15, A15-30K, A16, A16-22, A18, A13, A17, B1, B3, B5, B11, B12, B19, B20, B22, B23, B24, B25, B27, B29, C-OP3S; ALPHA-STEP™ ML40, MC48; STEPANOL™ MG; all produced by STEPAN CO., Chicago, IL; HOSTAPUR™ SAS produced by HOECHST CELANESE; HAMPOSYL™ C30 and L30 produced by W.R.GRACE & CO., Lexington, MA.

Non-ionic surfactants include polyethoxylates, such as ethoxylated alkyl polyethylene glycol ethers; polyoxyalkylene alkyl ethers; polyoxyalkylene sorbitan esters; polyoxyalkylene esters; polyoxyalkylene alkylphenyl ethers, ethoxylated amides; ethoxylated alcohols; ethoxylated esters; polysorbate esters; polyoxypropylene compounds, such as propoxylated alcohols; ethoxylated/propoxylated block polymers and propoxylated esters; alkanolamides; amine oxides; fatty acid esters of polyhydric alcohols, such as ethylene glycol esters, diethylene glycol esters, propylene glycol esters, glyceryl esters, polyglyceryl fatty acid esters, sorbitan esters, sucrose esters and glucose esters. Commercial non-ionic surfactants include, for the sake of example, TERGITOL™ TMN-6, TERGITOL™ 15S40, TERGITOL™ 15S9, TERGITOL™ 15S12, TERGITOL™ 15S15 and TERGITOL™ 15S20, and TRITON™ X405 produced by The Dow Chemical Company of Midland, Michigan; BRIJ™ 30 and BRIJ™ 35 produced by Croda (UK); MAKON™ 10 produced by STEPAN COMPANY, (Chicago, IL); and ETHOMID™ O/17 produced by Akzo Nobel Surfactants (Chicago, IL).

Amphoteric surfactants include glycinates, betaines, sultaines and alkyl aminopropionates. These include

cocoamphglycinate, cocoamphocarboxy-glycinates, cocoamidopropylbetaine, lauryl betaine, cocoamidopropylhydroxysultaine, laurylsulataine and cocoamphodipropionate.

Amphoteric surfactants which are commercially available and useful herein include, for the sake of example, REWOTERIC™ AM TEG, AM DLM-35, AM B14 LS, AM CAS and AM LP produced by SHEREX CHEMICAL CO., Dublin, OH.

Cationic surfactants include aliphatic fatty amines and their derivatives, such as dodecylamine acetate, octadecylamine acetate and acetates of the amines of tallow fatty acids;

homologues of aromatic amines having fatty chains, such as dodecylanalin; fatty amides derived from aliphatic diamines, such as undecylimidazoline; fatty amides derived from disubstituted amines, such as oleylaminodiethylamine; derivatives of ethylene diamine;

quaternary ammonium compounds, such as tallow trimethyl ammonium chloride, dioctadecyldimethyl ammonium chloride, didodecyldimethyl ammonium chloride and dihexadecyldimethyl ammonium chloride; amide derivatives of amino alcohols, such as beta-hydroxyethylstearyl amide; amine salts of long chain fatty acids; quaternary ammonium bases derived from fatty amides of di-substituted diamines, such as oleylbenzylaminoethylene diethylamine hydrochloride; quaternary ammonium bases of the benzimidazolines, such as methylheptadecyl benzimidazole hydrobromide; basic compounds of pyridinium and its derivatives, such as cetylpyridinium chloride; sulfonium compounds, such as octadecylsulfonium methyl sulphate; quaternary ammonium compounds of betaine, such as betaine compounds of diethylamino acetic acid and octadecylchloromethyl ether; urethanes of ethylene diamine, such as the condensation products of stearic acid and diethylene triamine; polyethylene diamines and polypropanolpolyethanol amines.

Cationic surfactants which are commercially available and useful herein include, for the sake of example, ARQUAD™ T27W, ARQUAD™ 16-29, ARQUAD™ C-33, ARQUAD™ T50, ETHOQUAD™ T/13 ACETATE, all manufactured by Akzo Nobel Surfactants (Chicago, IL).

When present, the one or more surfactants will usually be present in the composition herein at levels of from 0.1 wt. % to 15 wt. %, alternatively, from 0.1% to 11 wt. %, of the composition.

The part A composition and part B compositions may be prepared in any suitable fashion. As an example:

The part A composition might include, for the sake of example, one or more polymers in accordance with component (i) as hereinbefore described, component (iii) and one or more of the aforementioned optional components such as a surfactant, pigments or colorants and/or an MQ resin foam stabilizer.

The part B composition might include, for the sake of example, one or more polymers in accordance with component (i) as hereinbefore described, component (ii) and one or more of the aforementioned optional components such as a surfactant, pigments or colorants and/or an MQ resin foam stabilizer.

If optional filler is present in the composition of part A or part B then typically a base comprising component (i) polymer and said filler will initially be prepared. Where required and if not pretreated the filler may be hydrophobically treated in-situ with a hydrophobing agent as described above during the preparation of the base. The remaining ingredients would then be introduced into said base after the preparation of the base. In the case when no filler is present in one or both of part A and part B the ingredients may be blended in any order of addition, optionally with a master batch, and optionally under shear.

Each part A and part B composition has a viscosity of from 200 to 50,000mPa.s at 25°C, alternatively, 500 to 50,000mPa.s at 25°C, alternatively from 500 to 30,000mPa.s at 25°C, alternatively from 500 to 20,000mPa.s at 25°C, alternatively 500 to 10,000mPa.s at 25°C.

## Foam

In many embodiments, the foam is a closed-cell foam. In various embodiments, the foam has a specific gravity which is greater than zero but less than (<)1.2, alternatively < 1.0, alternatively < 0.9, alternatively < 0.8, alternatively < 0.7, alternatively < 0.6, alternatively < 0.5, alternatively < 0.45, alternatively < 0.4, alternatively < 0.35, alternatively < 0.3, alternatively < 0.25, alternatively < 0.2, alternatively < 0.15, alternatively < 0.1, and alternatively < 0.05.

If specific gravity s too high, the foam may be too heavy or stiff for certain applications. If density is too low, the foam may lack desired structural integrity for certain applications. specific gravity of the foam can be determined via methods understood in the art. For example, specific gravity of the foam can be measured via the Archimedes principle, using a balance and density kit, and following standard instructions associated with such balances and kits. An example of a suitable balance is a Mettler-Toledo XS205DU balance with density kit.

In various embodiments, the foam has pores that are generally uniform in size and/or shape. In certain

embodiments, the foam has an average pore size which is greater than zero and less than or equal to (≤) 5 millimeters, alternatively ≤ 2.5 millimeters, alternatively ≤ 1 millimeter, alternatively ≤ 0.5 millimeters, alternatively ≤ 0.25 millimeters, alternatively ≤ 0.1 millimeters, and alternatively ≤ 0.05 millimeters. Average pore size can be determined via methods understood in the art. For example, ATSM method D3576-15 with the following modifications may be used: (1) image a foam using optical or electron microscopy rather than projecting the image on a screen; and (2) scribe a line of known length that spans greater than 15 cells rather than scribing a 30 mm line.

## Multiple-Part Composition

This disclosure also relates to a multiple-part silicone foam composition, typically a two-part composition (excluding the gaseous blowing agent). Such a two-part composition comprises a first part, part A and a second part, part B. Part A comprises at least components (i) and (iii) and Part B comprises at least components (i) and (ii) with part A free of component (ii) the cross-linker and part B free of component (iii) catalyst. As described above Parts A and B of the composition are kept separate until entering the dynamic mixer in step (f) to prevent premature reaction of the multiple-part silicone foam composition, for ease of handling and storage, for ease of composition, etc. Typically, when present the reaction inhibitor is present in part B with component (ii) but otherwise, each of the other optional components of the composition as described above can be in either or both part A and part B or if desired may be introduced in one or more additional parts separate from the two parts (such that the system may be a three or more part system).

## Method

As hereinbefore described the method includes the steps of:

(a) introducing a part A composition and a Part B composition into respective mixing containers and mixing;
(b) transporting the part A and part B compositions of step (a) respectively via a pumping means at a pre-determined rate to a dispensing valve means;
(c) simultaneously transporting a gaseous blowing agent comprising at least one non-flammable and/or inert gas (i.e., non-flammable, inert or non-flammable and inert) which is gaseous at 0°C (zero °C) and atmospheric pressure via a metering gas valve at a pre-determined rate to said dispensing valve means;
(d) transporting said part A composition through a first dispensing valve means at said predefined rate whilst introducing said gaseous blowing agent therein to form a part A composition pressurised with said blowing agent;
(e) simultaneously with step (d) transporting said part B composition through a second said dispensing valve means at said predefined rate whilst introducing said gaseous blowing agent therein to form a part B composition pressurised with said blowing agent;
(f) transporting the products of steps (d) and (e) into a dynamic mixer at the predefined mixing rate and thereby mixing the part A composition pressurised with said blowing agent with the part B pressurised with said blowing agent causing foaming to form a foaming curable mixture of the part A and part B compositions therein; and
(g) dispensing the resulting curable mixture of step (f) to flow onto or into a desired target and allowing said foaming curable mixture to cure to a cured silicone foam product.

In the case of step (a) the respective part A and part B compositions may be stored in any suitable storage containers providing they can be metered therefrom at the predefined rate in step (b). In one embodiment the storage containers are mixing containers designed to ensure the respective compositions are homogeneous before being metered at a predefined rate in step (b). The part A and B compositions are stored independent of each other so that they cannot be mixed in step (a). Optionally each storage container is temperature controllable such that the part A composition and part B composition can be independently maintained within a desired temperature range. If desired, a recirculation system can be present to circulate the material between the meter and the tank while the process is idle.

In the case of step (b) any suitable pumping means may be used to meter the respective part A and part B compositions at the respective predetermined rate(s) from said storage containers. The storage containers and the metering system may be combined in a single metering apparatus, such as for the sake of example a Graco™ PR70f, 1:1 to 12:1, Fixed Ratio Dispensing System with Flow Control from Graco Inc. In one embodiment the predefined flow rate from each storage container respectively for the part A and part B compositions may be the same or different, depending on the intended weight ratio to be mixed together later in the process, for example the flow rate for the part A composition and/or the part B composition may be greater than (>) 1 cubic centimeter (cc) per second, alternatively > 10 cc per second, most alternatively > 15 cc per second. In one embodiment the part A composition and the part B composition are mixed in a 1 : 1 weight ratio in which case both have the same flow rate.

The part A and part B compositions are transferred from their respective metering system(s) (which may comprise different parts of the same apparatus) to a dispensing valve means in steps (d) and (e) respectively.

In step (d) the part A composition is transferred from its metering system to a dispensing valve means at a predefined rate. The dispensing valve means into which the part A composition is introduced comprises at least a first and second fluid entry ports, a fluid receiving chamber and an exit port. In one embodiment the part A composition enters the fluid receiving chamber via the first fluid entry port which comprises a suitable entry valve e.g., a reverse acting valve.

Analogously, in step (e), the part B composition is transferred from its metering system to a dispensing valve means at a predefined rate. The dispensing valve means into which the part B composition is introduced is typically identical to that used for the part A composition and also comprises at least a first and second fluid entry ports, a fluid receiving chamber and an exit port. In one embodiment the part B composition enters the fluid receiving chamber via the first fluid entry port which may comprise a suitable entry valve e.g., a reverse acting valve.

In step (c), the gaseous blowing agent is transported into the respective dispensing valve means at a predefined rate. Any suitable gas or gases which meet the required criteria of being non-flammable and/or inert gas (i.e., non-flammable, inert or non-flammable and inert) which is gaseous at 0°C (zero °C) and atmospheric pressure may be utilised. In one alternative the gaseous blowing agent may be selected from, but is not restricted to air, carbon dioxide, nitrogen or mixtures thereof.

The blowing agent is introduced into the respective dispensing valve means fluid receiving chamber containing the part A composition or part B composition via the respective second entry port. The selected gaseous blowing agent(s) is/are utilised to pressurize the respective part A and part B compositions in the respective dispensing valve means with the incoming gaseous blowing agent gas pressure being of any suitable range, for example, being in the range of between 0.689 kPa and 20.68 MPa (0.1 psi - 3000 psi), alternatively between 0.689 kPa and 6.89 MPa (0.1 psi - 1000 psi), alternatively between 0.689 kPa and 3.48 MPa (0.1 psi - 500 psi), alternatively 0.689 kPa and 1.379MPa (0.1 psi - 200 psi).

The exposure of the respective Part A composition and Part B compositions to the gaseous blowing agent in the respective dispensing valve means may be controlled by any suitable means such as through on/off valves. The respective Part A and Part B compositions may have any suitable residence time in the dispensing valve means but the residence time is preferably from 0.01 seconds to 5 min, preferably less than 5 minutes, alternatively less than 2 min residence time, alternatively less than 1 min residence time. In one embodiment the respective Part A and Part B compositions are exposed to the gaseous blowing agent throughout the residence time in their respective dispensing valve means and as such said residence time may also be equated to the pressurization time i.e., the period by which the respective composition is exposed to gaseous blowing agent in the dispensing valve means. In one embodiment herein the specific gravity of the silicone composition generated during mixing may be controlled by controlling the incoming gas pressure and gas exposure timing of said part A and part B compositions. This may be achieved by any suitable means for example by limiting the introduction of the blowing agent by e.g., preventing additional gaseous blowing agent into the dispensing valve means once a maximum pressure in the dispensing valve means has been reached and then recommencing the introduction of said gaseous blowing agent once the pressure level has dropped below a predetermined value. While the residence time can be longer it was found that this tended to lead to much longer mixing times when the pressurised part A and part B compositions are mixed together and can lead to blockage in the foam composition dispenser head used thereafter to apply the foam to the required target.

Upon completion of the residence time/pressurization time of the respective Part A and Part B compositions in the dispensing valve means the resulting respective pressurised Part A and Part B compositions are transferred into a suitable dynamic mixer in order to mix said pressurised Part A and Part B compositions to form a curable silicone foam composition and to cause the commencement of foaming in said composition. The pressurised Part A and Part B compositions typically preferably require, alternatively definitely require no additional gas pressurization to assist in said transfer.

Each dispensing valve means may be any suitable dispensing valve means and indeed both the dispensing valve means utilised above may form part of a single piece of equipment such as, for the sake of example a Graco™ Voltex™ Two-Component Dynamic Mix Valve, Model No. 25T670 from Graco Inc. which comprises two separated dispensing valve means which are designed to feed in this case both the resulting part A composition pressurised with said blowing agent and the part B composition pressurised with said blowing agent out of the respective dispensing valve means through their respective exit ports to the dynamic mixer where the two are mixed to form a curable silicone foam composition which commences foaming.

Optionally either or both dispensing valve means may be temperature controllable such that the part A composition and part B composition can each be maintained within a desired temperature range whilst resident in said respective pump.

The dynamic mixer may be any suitable dynamic mixer for mixing said pressurised Part A and Part B compositions and causing foaming thereby. In one embodiment the dynamic mixer is a rotary mixer such as for the sake of example a Graco™ Rotary mixer MR13-12 from Graco Inc. Preferably when the dynamic mixer is a rotary mixer said rotary mixer that can rotate at speeds of from 5 rpm to 4000 rpm. The dynamic mixer may comprise a foam composition dispenser head e.g., a dispenser head or the like from which the resulting curable silicone foam composition is dispensed onto or into the target for which said silicone foam composition is intended. Said foam composition dispenser head may be stationary or may be mobile but preferably the foam composition dispenser head and the target can move relative to each

other, i.e., one or other of the dispensing means or the target can move relative to the other, especially if either one is fixed in place. If desired, the foam composition dispenser head herein may include a suitable dispensing tip. When present if desired the dispensing tip may be utilised to control the cell size of the silicone foam product generated herein by varying the dispensing tip gauge.

Control valves e.g., pressure, temperature or other control valves may be utilised throughout the apparatus utilised for the process herein to control the process, e.g., to control the pressure at different points in the process herein. Advantageously, it was determined that various properties of foam produced using the process as described herein may be controlled by controlling different aspects of the process. This can be very important for a continuous process as described herein as the physical properties of the foam produced can affect a variety of the properties sought after by end users of the foams produced by the continuous process herein such as, for the sake of example, thermal conductivity, acoustic impedance, and foam specific gravity. Hence, having the ability to control physical characteristics of a foam resulting from a continuous process as described herein is critical for the process to be successful. For, example, the rise of the resulting silicone foam product, amongst other properties may be controlled in the above continuous process by varying the dispense temperature, flow rate and/or varying the concentration of the blowing agent.

Given the initial viscosities of the part A and part B compositions utilised to prepare the resulting curable silicone foam composition, the resulting curable silicone foam composition may be designed to be able to flow around a target cavity and when the flow has stopped self-level thereby avoiding voids in the curable silicone foam composition and consequently in the resulting cured silicone foam product e.g., when being used to fill a large cavity with silicone foam.

The avoidance for the need to use traditional chemical blowing agents which rely on the release of hydrogen gas to generate foams and physical blowing agents which undergo a liquid to gas phase change at atmospheric pressure and a suitable temperature typically greater than or equal to (≥) at least 10°C, alternatively ≥ 20 °C provides the user of the process herein with added benefits. For example, with respect to said physical blowing agents, this creates a problem for the use in that pressurizable tanks are needed to store such blowing agents prior to use in a foaming process. These are expensive and adding the blowing agent is time consuming and hazardous. Such a necessity is avoided in the present disclosure given the blowing agents used herein where inert gas is added directly into the respective part A composition and part B composition dispensing valve means. Drums can be easily used without the need for pressurized tanks etc. resulting in cost savings, higher flexibility and above all simpler and safer operational requirements leading to higher throughputs and consequential time savings for mass production.

Furthermore, by avoiding the need to generate hydrogen to cause foaming e.g., using silicones and or silanes comprising Si-H groups the manufacturer benefits as they can reduce process and transportation costs given much less volumes of silicones and or silanes comprising Si-H groups are required. For example, hydrogen blown foams are very challenging to transport due to bulging containers / explosive from excess Si-H, especially as these cannot be easily air freighted. The use of the blowing agents herein negates many of these problems as the gases used are much easier to transport and handle during manufacture processes and result in cost savings.

## BRIEF DESCRIPTION OF THE FIGURE

The Figure herein are provided to illustrating the methods utilised herein and the resulting foams produced as follows:

Figure 1 is a schematic view of a continuous process as described herein for the manufacture of silicone foams utilising a blowing agent which is a non-flammable and/or inert gas at 0°C (zero °C) and atmospheric pressure (approximately 101,325 Pa).

In Fig.1 there is provided a schematic view of a continuous process embodiment for making a silicone foam as described herein in which there is provided a source of pre-prepared part A composition (1) which is used to supply said pre-prepared part A composition into storage container (4). There is also provided a source of pre-prepared part B composition (2) which is used to supply said pre-prepared part A composition into storage container (5). Storage containers (4) and (5) may be mixing containers providing a means of mixing the part A composition and part B composition respectively to ensure they are thoroughly mixed and homogeneous before transportation.

Storage container (4) is linked to a metering and pumping means (6). Metering and pumping means (6) is provided in order to control the flow of part A composition at a pre-determined rate to a dispensing valve means in dispensing valve apparatus (9). Likewise, storage container (5) is linked to a metering and pumping means (7). Metering and pumping means (6) is provided in order to control the flow of part A composition at a pre-determined rate to said a dispensing valve means in dispensing valve apparatus (9). Likewise, metering and pumping means (7) is provided in order to control the flow of part B composition at a pre-determined rate to the dispensing valve means in dispensing valve apparatus (9). Both of the storage containers (4) and (5) and their respective metering and pumping means (6) and (7) may be part of the same piece of equipment. Indeed, the storage, metering and pumping equipment (4), (6), (5) and (7) for both the part A composition and the part B composition may be two identical storage, metering and pumping systems in a single piece of apparatus such as a Graco™ PR70f, 1:1 to 12:1, Fixed Ratio Dispensing System with Flow Control.

There is also provided a reservoir (3) for a gaseous blowing agent and a gas supply control valve (8) designed to control the flow of gaseous blowing agent to dispensing valve means in dispensing valve apparatus (9).

Dispensing valve means in dispensing valve apparatus (9) comprises at least a first and second fluid entry ports, a fluid receiving chamber and an exit port. The first dispensing valve means of dispensing valve apparatus (9) is positioned to receive the part A composition supplied from metering and pumping means (6) and gaseous blowing agent from reservoir (3) via gas supply control valve (8) with a view to preparing a part A composition pressurised with gaseous blowing agent. Likewise, the second dispensing valve means of dispensing valve apparatus (9) is positioned to receive the part B composition supplied from metering and pumping means (7) and gaseous blowing agent from reservoir (3) via gas supply control valve (8) with a view to preparing a part B composition pressurised with gaseous blowing agent There is also provided a mixer element (10) designed to receive part A composition pressurised with gaseous blowing agent and part B composition pressurised with gaseous blowing agent and mix said compositions to make a curable silicone foam composition, whilst causing the composition to at least commence foaming. Dynamic mixer (10) also provides a foam composition dispenser head (not shown) for dispensing said curable silicone foam composition received from valve means (9) after same has been mixed.

In use, pre-prepared part A composition is transported from source of pre-prepared part A composition (1) into storage container (4) and pre-prepared part B composition is transported from source of pre-prepared part B composition (2) into storage container (5). If desired, the part A composition may be mixed in storage container (4) and the part B composition may be mixed in storage container (5) to maintain respective homogeneity thereof. Then the part A composition is transported to the first dispensing valve means of dispensing valve means in dispensing valve apparatus (9) at a predefined rate via metering and pumping means (6) and the part B composition is transported to the second dispensing valve means of dispensing valve means in dispensing valve apparatus (9) at a predefined rate via metering and pumping means (7). The predefined rate of flow of the part A composition and the part B composition may be the same or different dependent on the weight ratio in which the two are to be mixed in mixer (10). For example, when the weight ratio of part A composition to part B composition to be mixed in mixer (10) is 1 : 1 then the flow rate of both compositions will be the same but will differ as required in cases when the ratio differs.

Simultaneously, gaseous blowing agent is also transported from reservoir (3) via gas supply control valve (8) to said first and second dispensing valve means of in dispensing valve apparatus (9) in order to prepare a part A composition pressurised with gaseous blowing agent in the first dispensing valve means and a part B composition pressurised with gaseous blowing agent in the second dispensing valve means. The resulting a part A composition pressurised with gaseous blowing agent and a part B composition pressurised with gaseous blowing agent are then transported from said dispensing valve means into mixer element (10) which mixes same to provide a curable silicone foam composition, whilst causing the composition to at least commence foaming. The resulting curable silicone foam composition is then dispensed into or onto a target and allowed to foam and cure.

## INDUSTRIAL APPLICABILITY

The compositions, foams, and methods of this disclosure are useful for a variety of end applications and are not limited to a particular one. Examples of suitable applications include space filling applications, automotive applications (e.g., for control modules), and the like. The foams can be used to at least partially cover or encapsulate articles, such as batteries and other electronic components. The foams can also be used for thermal insulation. The automotive applications may be selected as a barrier between lithium-ion battery cells for thermal and electrical insulation and/or as a means of compressible support between cells; and/or as a means of insulating cavities in an automobile engine or battery, and as a means of reducing noise vibration harshness or for automotive door insulation.

Moreover, the foams can be used as a fire block. In a further alternative the foams may be used for water exclusion applications, i.e., as a moisture seal. In general, the foams of this disclosure provide a combination of desirable physical properties relative to conventional foams, including one or more of the following: reduced weight, lowered specific gravity, increased thermal resistance, increased stability, etc. The foams can be formed in environments where the formation of hydrogen gas is a concern. In addition, the foams can be foamed at room temperature or thereabout, which is useful for temperature sensitive applications.

The following examples are provided to illustrate the compositions, foams, and methods, are intended to illustrate and not to limit the invention.

## EXAMPLES

Multiple-part silicone foam composition were generated utilizing different types and amounts of components. These are detailed below. All amounts are in weight % unless indicated otherwise. As discussed above all viscosities are measured at 25°C using a Brookfield CAP 2000+ viscometer, Spindle: LV-4 (designed for viscosities in the range between 1,000-2,000,000 mPa.s) or spindle LV-1 (designed for viscosities in the range between 15 -20,000 mPa.s) for viscosities

less than 1000 mPa.s, in each case at a 10 rpm rotation speed.

The alkenyl and/or alkynyl content of polymers as well as the silicon-bonded hydrogen (Si-H) content of polymers was determined using quantitative infra-red analysis in accordance with ASTM E168.

In Tables 1a to 1d the compositions utilised the following:

Polydiorganosiloxane 1 is dimethylvinyl-terminated dimethylsiloxane having a viscosity of 450 mPa.s at 25 °C;
Polydiorganosiloxane 2 is dimethylvinyl-terminated dimethylsiloxane having a viscosity of 55,000 mPa.s at 25 °C;
Organohydrogensiloxane 1 is trimethyl-terminated, methylhydrogen siloxane, having a viscosity of ~30 mPa.s and ~1.6 wt.% SiH;
Organohydrogensiloxane 2 is Trimethyl-terminated dimethyl Me hydrogen siloxane, having a viscosity of ~ 5 mPa.s and ~ 0.8% SiH;
Catalyst is 1,3-diethenyl-1,1,3,3 -tetramethyldisiloxane Complexes (Platinum)) in dimethylvinyl terminated Dimethyl Siloxane;
Additive 1 is ground silica having an average particle size of 5μm;
Additive 2 is a commercial surfactant sold as DOWSIL™ 3-9727 Profoamer by Dow Silicones Corporation of Midland, Michigan;
Additive 3 is a blend of Dimethylvinylsiloxy-terminated dimethyl siloxane, having a viscosity of about 430 mPa.s at 25°C and about 0.46 wt. % Vinyl (vi); and a $^{vi}$MMQ resin, having a viscosity of about 45,000 mPa.s at 25°C and about 0.39 wt. % Vi;
Additive 4 is a blend of zinc oxide (12 wt. %), carbon black (6 wt. %) in Dimethylvinylsiloxy-terminated Dimethyl Siloxane, having a viscosity of about 20,000 mPa.s at 25°C; and
Additive 5 is methylvinylcyclosiloxane (inhibitor).

In the present examples, the part A composition of each example and comparative was prepared in an overhead mixer in accordance with the compositions identified in Tables 1a and 1c by mixing the ingredients at amibient temperature until all components were blended into a were blended into a homogeneous mixture.

Likewise, the respective part B compositions of each example and comparative were prepared in an overhead mixer in accordance with the compositions identified in Tables 1b and 1d by mixing the ingredients at amibient temperature until all components were blended into a homogeneous mixture.

In each instance the viscosity of the resulting part A and part B compositions were then measured using an ARES-G2 rheometer from TA Instruments, equipped with a 40mm cone and plate at 25°C. A shear sweep was done from 1 to 1000 $s^{-1}$ at 7pts per decade). The viscosity value at shear rate of 10 $s^{-1}$ was reported. The respective compositions and resulting viscosities of the compositions are provided in Tables 1a - 1d.

Table 1a: Part A compositions of Ex. 1 to 5 (wt. %)

| | **Ex. 1** | **Ex. 2** | **Ex. 3** | **Ex. 4** | **Ex. 5** |
|---|---|---|---|---|---|
| Polydiorganosiloxane 1 | 27.50% | 57.50% | 66.00% | 47.75% | 60.15% |
| Polydiorganosiloxane 2 | 41.25% | 2.25% | 11.75% | | 15.00% |
| Catalyst | 0.25% | 0.25% | 0.25% | 0.25% | 0.25% |
| Additive 1 | 25.00% | 40.00% | 10.00% | 40.00% | 12.60% |
| Additive 2 | 6.00% | | 12.00% | 12.00% | 12.00% |
| Part A Subtotal | 100.00% | 100.00% | 100.00% | 100.00% | 100.00% |
| Viscosity of the resultant composition (Pa.s) at 25°C | 17.71 | 1.92 | 1.19 | 1.05 | 1.63 |

Table 1b: Part B compositions of Ex. 1 to 5 (wt. %)

| | **Ex. 1** | **Ex. 2** | **Ex. 3** | **Ex. 4** | **Ex. 5** |
|---|---|---|---|---|---|
| Polydiorganosiloxane 1 | 26.20% | 30.61% | 59.85% | 30.80% | 57.40% |
| Polydiorganosiloxane 2 | 19.85% | | | | |
| Organohydrogensiloxane 1 | 1.95% | 2.39% | 3.15% | 2.20% | 3.00% |
| Additive 1 | 25.00% | 40.00% | 10.00% | 40.00% | 12.60% |
| Additive 3 | 27.00% | 27.00% | 27.00% | 27.00% | 27.00% |

(continued)

| | Ex. 1 | Ex. 2 | Ex. 3 | Ex. 4 | Ex. 5 |
|---|---|---|---|---|---|
| Part B Subtotal | 100.00% | 100.00% | 100.00% | 100.00% | 100.00% |
| Viscosity of the resultant composition (Pa.s) at 25°C | 19.73 | 11.87 | 2.42 | 11.03 | 2.68 |

Table 1c: Part A compositions of Comparatives C. 1 and C. 2 as well as Ex. 6 (wt. %)

| | C. 1 | C. 2 | Ex. 6 |
|---|---|---|---|
| Polydiorganosiloxane 1 | | | 43.52 |
| Polydiorganosiloxane 2 | 47.75% | 89.75% | |
| Catalyst | 0.25% | 0.25% | 0.19% |
| Additive 1 | 40.00% | 10.00% | 43.52 |
| Additive 2 | 12.00% | | 6.00 |
| Additive 4 | | | 6.77 |
| Part A Subtotal | 100.00% | 100.00% | 100.00% |
| Viscosity of the resultant composition (Pa.s) at 25°C | 61.79 | 62.79 | 1.33 |

Table 1d: Part B compositions of Comparatives C. 1 and C. 2 as well as Ex. 6 (wt. %)

| | C. 1 | C. 2 | Ex. 6 |
|---|---|---|---|
| Polydiorganosiloxane 1 | | | 43.47% |
| Polydiorganosiloxane 2 | 32.01% | 61.75% | |
| Organohydrogensiloxane 1 | 0.99% | 1.25% | 1.12% |
| Organohydrogensiloxane 2 | | | 5.94% |
| Additive 1 | 40.00% | 10.00% | 43.46% |
| Additive 2 | | | 6.00% |
| Additive 3 | 27.00% | 27.00% | |
| Additive 5 | | | 0.01% |
| Part B Subtotal | 100.00% | 100.00% | 100.00% |
| Viscosity of the resultant composition (Pa.s) at 25°C | 120.29 | 55.4 | |

With a view to determining the percentage change of the specific gravity of the cured foam compared to a cured but unfoamed product, cured unfoamed samples of each example were prepared. For all examples and comparatives below, unless otherwise indicated when mixed togather the part A and part B compositions wer mixed in a 1 : 1 weight ratio.

**Preparation procedure for reference unfoamed cured product samples with no blowing agent:**

**Material preparation:**

For each example and comparative composition, equal amounts (by weight) of the respective Part A and Part B compositions were introduced into a clean plastic dental cup and hand-mixed using a plastic spatula for 30 seconds. In cases where entrained air was evident, a 20 second speed mix (at 1200 rpm) was employed to de-air the sample.

The resulting mixture of the combined parts A and B was poured/transferred into an aluminum chase. A Teflon sheet was placed on top of the chase followed by an aluminum backer plate.

The assembly was then transferred to a hydraulic press and press cured under 30 tons of pressure at room temperature for 15 minutes. The assembly was removed from the press and allowed to rest at room temperature for at least one hour before removing the cured slab from the aluminum chase for use in subsequent evaluation. Subsequent to the above the specific gravity of the resulting cured samples were measured. All specific gravity measurements followed the same process as described below.

**Specific Gravity measurement Method**

The specific gravity of each sample (irrespective of whether foamed or unfoamed) was determined using a density determination kit (Sartorius YDK01, Cole-Parmer, Vernon Hills, IL) and a microbalance (Mettler AE 160, Mettler Toledo, Columbus, OH), based on the Archimedes principle using the following equation:

$$\rho_f = \frac{w_a \times \rho}{w_a - w_f}$$

where $\rho_f$ is the density of foam, $\rho$ is the density of deionized water (1 gm/cm$^3$), $w_a$ is the weight of solid in water and $w_f$ is the weight of solid in air. The specific gravity (SG) is the ratio of the density of a substance ($\rho_f$ )to the density of water ($\rho$) at a specified temperature, i.e.

$$SG = \rho_f / \rho$$

The specific gravity results of the unfoamed samples were compared with the results for equivalent samples which had been cured after foaming using the process described herein. The specific gravity results and the details of the percentage decrease recorded are depicted in Tables 2a and 2b below together with the process details with respect to the blowing agent and the process described herein. Each foamed silicone product prepared in accordance with the disclosure herein was prepared in accordance with the following process:
For each example, a pre-prepared Part A composition and a pre-prepared part B composition were introduced into separate storage containers in a Graco™ PR70f, 1:1 to 12:1, Fixed Ratio Dispensing System with Flow Control (hereafter "Graco™ PR70f'). The respective compositions were then separately dispensed from said Graco™ PR70f at the same flow rate as indicated in Tables 2a (example compositions) and 2b (comparative compositions) and transported into a Graco™ Voltex™ Two-Component Dynamic Mix Valve, Model No. 25T670 in which the gaseous blowing agent as described in Tables 2a and 2b was introduced separately into the part A composition stream and the part B composition stream. The blowing agent chosen for the foam to be produced (as indicated in Tables 2a and b) was introduced into the part A composition stream and separately into the part B composition stream again at the same specified gas pressure identified in Tables 2a and 2b for the same period of time of up to 1 minute. The rates are the same to ensure good mixing at equal rates. The resulting component A and component B compositions in each case pressurised by the introduced gaseous blowing agent were then transported to Graco™ Rotary mixer MR13-12 using part number: 25S029, 12 elements, 13 mm diameter which had a 4 mm outlet diameter. The rotary mixer was used to mix said pressurised part A and pressurised part B compositions at the rotation rates indicated in Tables 2a and 2b. The mixing of the pressurised parts A and B initiated cure and foaming which continued during and after the mixed part A and part B composition was dispensed from the rotary mixer into a suitable foaming vessel. The amount of foamed compositing dispensed from the rotary mixer was also noted in Tables 2a and 2b.

The foam dispensed into the foaming vessel was then allowed to cure after which samples were analysed for their specific gravity using the test and equipment discussed above. The specific gravity of the cured foams were determined and compared with that of the unfoamed samples and the reduction in specific gravity (%) were also noted and tabulated in Tables 2a and 2b based on the following formula:

$$\text{Reduction in SG (\%)} = 100 \times \frac{\text{(Specific gravity of foam} - \text{Specific gravity of reference slab)}}{\text{Specific gravity of reference slab}}$$

Table 2a: Process details utilised for foams 1, 2, 4, 5 and 8 - 12 prepared in accordance with the present disclosure & results showing the reduction in specific gravity of cured foamed silicone products

| Foam | Comp$^n$ | Blowing Agent | Blowing Agent Pressure (MPa) | Flow rate (cm$^3$/s) | Dispense Amount (g) | Mixer rotation speed (rpm) | Specific Gravity (SG) | Reduction in SG (%) |
|---|---|---|---|---|---|---|---|---|
| Foam 1 | Ex. 1 | Air | 1.379 | 2.5 | 80 | 500 | 0.88 | 24.43 |
| Foam 2 | Ex. 1 | $CO_2$ | 2.068 | 4.5 | 80 | 500 | 0.90 | 23.10 |
| Foam 4 | Ex. 2 | $CO_2$ | 1.379 | 8 | 80 | 2000 | 0.72 | 45.41 |

(continued)

| Foam | Comp$^n$ | Blowing Agent | Blowing Agent Pressure (MPa) | Flow rate ($cm^3/s$) | Dispense Amount (g) | Mixer rotation speed (rpm) | Specific Gravity (SG) | Reduction in SG (%) |
|---|---|---|---|---|---|---|---|---|
| Foam 5 | Ex. 2 | Air | 1.379 | 10 | 80 | 2000 | 0.93 | 29.17 |
| Foam 8 | Ex. 3 | $CO_2$ | 1.379 | 15 | 80 | 2800 | 0.55 | 47.70 |
| Foam 9 | Ex. 3 | Air | 1.379 | 15 | 80 | 2800 | 0.71 | 32.89 |
| Foam 10 | Ex. 4 | $CO_2$ | 2.068 | 20 | 80 | 2000 | 0.66 | 49.24 |
| Foam 11 | Ex. 4 | Air | 1.379 | 15 | 80 | 2000 | 0.89 | 31.09 |
| Foam 12 | Ex. 5 | $CO_2$ | 0.827 | 9 | 1000 | 2800 | 0.69 | 31.58 |

Table 2b: Process details utilised for foams 3, 6 and 7 prepared in accordance with the present disclosure but using comparative compositions & results showing the reduction in specific gravity of cured foamed silicone products

| Foam | Comp$^n$ | Blowing Agent | Blowing Agent Pressure (MPa) | Flow rate ($cm^3/s$) | Dispense Amount (g) | Mixer rotation speed (rpm) | Specific Gravity (SG) | Reduction in SG (%) |
|---|---|---|---|---|---|---|---|---|
| Foam 3 | C. 1 | $CO_2$ | 1.379 | 0.5 | 80 | 100 | 1.09 | 17.61 |
| Foam 6 | C. 2 | Air | 1.379 | 1 | 80 | 100 | 0.88 | 16.69 |
| Foam 7 | C. 2 | $CO_2$ | 0.689 | 0.5 | 80 | 100 | 0.87 | 17.36 |

In the case of the specific gravity results, reductions of greater than or equal to ≥ 20% was considered significant. It will be noted that the comparative compositions in Table 2b were prepared using compositions with parts > 50,000 mPa.s at 25°C viscosity and the specific gravity reduction was below 20% whereas all the foams made from silicone foam compositions in accordance with the disclosure herein showed greater reductions in specific gravity. The foams produced using the Example 1 to 5 compositions and the process herein were analysed and were found to produce foams having uniform cell size, typically having a closed cell morphology. Specific analysis of foam 12 showed the foam produced had an average cell size of about 170μm.

The gel time, the time at which the gel point (sometimes referred to as tan δ) is reached i.e., when storage modulus G' and the loss modulus G" coincide was determined for each composition. In these examples the part A and part B compositions for each example and comparative were weighed out according to the prescribed mixing ratio, hand-mixed with spatula for 10sec and then speed-mixed for 10s at 3000rpm. The measurements of G' and G" were determined by taking measurements using an ARES G2 rheometer from TA Instruments, equipped with a disposable aluminum 25mm diameter rotational plate and 100Pa stress. Measurements were taken at 25°C. Uncured samples were dispensed onto 25mm plate and a top plate brought down to about ~ 1mm to start the measurement. A rotary oscillation is carried out at an angular frequency of 10 rad/s and a shear strain of 1%. Measurements were made periodically, and the gel time was noted to be the first measurement when tan δ = G"/G' is equal to (or less than) 1 and this was considered to be when the composition had cured/gelled.

Table 2c: Gel time of each multiple-part silicone foam composition after combination of part A composition and part B composition

| | Gel Time (min) |
|---|---|
| Ex. 1 | 3.73 |
| Ex. 2 | 2 |
| Ex. 3 | 2.94 |
| Ex. 4 | 2.5 |
| Ex. 5 | 2.9 |
| C. 1 | 5.46 |

(continued)

| | Gel Time (min) |
|---|---|
| C. 2 | 6.92 |
| Ex. 6 | 1.8 |

Three further foams were prepared (foams 13, 14 and 15) using compositions C1, C2 and Ex.3 and the equipment described above with the foam produced using settings identified in Table 3 below.

Table 3

| Foam | Composition | Blowing Agent | Blowing Agent Pressure (MPa) | PR70 - Flow Rate ($cm^3$/s) | Mixer Speed (rpm) |
|---|---|---|---|---|---|
| Foam 13 | C. 1 | $CO_2$ | 1.379 | 0.5 | 100 |
| Foam 14 | C. 2 | $CO_2$ | 1.379 | 1 | 100 |
| Foam 15 | Ex. 3 | Air | 0.689 | 15 | 2800 |

The foams produced were used to assess whether they could be used to fill narrow gaps in a cylindrical mold with a view to simulating the variable gaps between adjacent cylindrical batteries using the process described herein. The cylindrical mold used was 76 mm in diameter, 100 mm in height. Seven cylindrical blocks (each 21 mm diameter and 70 mm in height) were inserted inside the cylindrical cavity simulating the positions of batteries with one central block surrounded by the six other blocks such that there was a gap between each cylindrical block of its neighbor(s) which was approximately 1.0 mm wide at its narrowest.

It was found that the foam generated using the Ex. 3 composition, foam 15, when dispensed from the rotary mixer was able to flow through the gaps between the cylindrical blocks in the mold to satisfactorily fill the gaps without any voids in the cured foam when the cylindrical blocks were removed once the foam had cured. However, foam 13 and foam 14 used comparative compositions C. 1 and C. 2 respectively, both of which had a viscosity of greater than > 50,000 mPa.s at 25°C from mixing the respective part A and part B compositions in a 1 : 1 weight ratio as shown in Tables 1b and 1d. Unlike for foam 15, both foams 13 and 14 were unable to fill the gaps completely as when the cylindrical blocks were removed after cure, voids were observed at the bottom of the mold. This indicated that the foams 13 and 14 cured before completely filling the gaps in the mold. In other words, foams 13 and 14 prepared from compositions C. 1 and C. 2 respectively were not appropriate for filling large cavity with narrow gaps.

Two further foams were prepared. Foam 16 was made from the composition of Ex. 3 and Foam 17 was made from the composition of Ex. 6. The foams were prepared in accordance with the disclosure herein. The foams generated were used to fill a large rectangular cavity with narrow gap. The foams were generated using the values depicted in Table 4. It was found that both foams 16 and 17 generated cured foams once left to cure when the respective foams were used to fill a large rectangular cavity with a narrow gap having the dimension of 250 mm long by 2 mm wide (gap width) by 80 mm high. Both Foam 16 and Foam 17 were prepared using formulation with viscosity < 50,000 mPa.s (Ex. 3 and Ex. 6 respectively).

Table 4

| | $Comp^n$ | Blowing Agent | Blowing Agent Pressure (MPa) | PR70 - Flow Rate (cc/s) | Mixer Rotation Rate (rpm) | Gel time (s) | Was cavity filled? |
|---|---|---|---|---|---|---|---|
| Foam 16 | Ex. 3 | $CO_2$ | 0.689 | 15 | 2800 | 176 | Yes |
| Foam 17 | Ex. 6 | $CO_2$ | 1.379 | 15 | 2800 | 108 | No |

It was found that whilst the foam 17 made from the Ex. 6 composition had too fast a gel time (about 110 seconds) for filling a large cavity through a narrow gap because the foaming mixture cured too quickly and therefore the foaming mixture was not able to fill across the whole cavity. However, it was satisfactory for applications seeking a fast-cured foam. Foam 16 made from the Ex. 3 composition had a longer gel time and as such was able to be used to fill the cavity used in the example.

**Process compared to Batch foaming process similar to the process described in WO2020028299A1**

In a further example, the process as described herein was compared with a Comparative batch feed foaming

procedure (but using the blowing agents of the present disclosure) which relies on a pre-equilibration of blowing agent gas. The composition of Ex. 5 was used to generate foam 18 using the comparative batch process. The blowing agent of the present disclosure was utilised.

In the comparative batch system, there is provided a first continuous stirred-tank reactor (CSTR) for storing and mixing a sample of a part A composition and a second CSTR for storing and mixing a sample of a part B composition.

Nitrogen pressure was typically used to force the compositions into their respective CSTR and an overpressure of 0.207MPa $N_2$ was maintained in the headspace of each CSTR.

A $CO_2$ cylinder is directly connected to the headspace of each CSTR but is isolated therefrom using a ball valve, so that the pressures can be adjusted as and when desired. The contents of the respective Part A and Part B CSTRs were mixed for one hour at room temperature to ensure adequate homogenization. The nitrogen overpressure was then used to transfer the respective part A composition and part B compositions from their CSTR to a respective positive-displacement pump (Teledyne ISCO DM100 syringe pump) via a 3-way valve to prepare for dispensing.

$CO_2$ was added to the headspace of each CSTR for 5 minutes. In this experiment $CO_2$ at a pressure of 0.827 MPa was fed into the CSTR head space and then the $CO_2$ was in contact with Part A and Part B in positive-displacement pumps for 5 min. (i.e., the gas equilibration / exposure time). The flow rate used was 200 mL/min.

Subsequent to gas equilibration the resulting compositions containing $CO_2$ were pumped from the respective positive-displacement pumps through traced tubing (for added temperature control) to a mixing block by realigning the 3-way valve and pumping. Said respective positive-displacement pumps were able to control the silicone composition flow rate volumetrically.

Ball valves and check valves were placed just upstream of the mixing block in both lines to prevent backflow of mixed silicone foam composition and potential foam cure in the lines.

The compositions were then mixed in a stainless-steel static mixer (Koflo™ model number 3/8-40-3-12-2, 3/8" from Koflo Corporation, pipe diameter, 12 elements and 8" in length). The part A and part B compositions containing $CO_2$ were pumped through and inter-mixed in the static mixer and dispensed into a target vessel. Target vessels were typically Max 100 cups used to observe foam structure and density. The flow rate used was 200 mL/min. The batch process yielded a foam with specific gravity of 0.59.

When compared to foam 12 made using the Ex. 5 composition and the process as described herein, it was found that both Foam 18 and Foam 12 yielded foam with a closed cell morphology and a > 20% specific gravity reduction. However, foam 18 produced using the comparative batch foaming process yielded a foam with a non-uniform cell size when assessed by scanning electron microscopy image (SEM). This indicated a bimodal cell diameter at 160 μm and 450 μm. Foam 12, produced from the inventive process, had more uniform cell size as observed by a SEM image, with an average cell diameter of about 170 μm.

## Claims

1. A continuous method for forming a foamed silicone product from a multiple-part silicone foam composition comprising the following components:

   i) at least one polydiorganosiloxane having a viscosity of from 500 to 75,000mPa.s at 25°C and at least two unsaturated groups per molecule which unsaturated groups are selected from alkenyl groups, alkynyl groups or a mixture thereof;
   ii) an organohydrogensiloxane having at least two, alternatively at least three silicon-bonded hydrogen atoms per molecule;
   iii) a hydrosilylation catalyst;

   wherein the multiple-part silicone foam composition comprises a part A composition comprising components (i) and (iii) and a part B composition comprising components (i) and (ii); and wherein each of the part A and part B composition has a viscosity of from 200 to 50, 000mPa.s at 25°C; which method comprises the steps of

   (a) introducing a part A composition and a Part B composition into respective mixing containers and mixing;
   (b) transporting the part A and part B compositions of step (a) respectively via a pumping means at a pre-determined rate to a dispensing valve means;
   (c) simultaneously transporting a gaseous blowing agent comprising at least one non-flammable, inert or non-flammable and inert which is gaseous at 0°C and atmospheric pressure via a metering gas valve at a pre-determined rate to said dispensing valve means;
   (d) transporting said part A composition through a first dispensing valve means at said predefined rate

whilst introducing said gaseous blowing agent therein to form a part A composition pressurised with said blowing agent;
(e) simultaneously with step (d) transporting said part B composition through a second said dispensing valve means at said predefined rate whilst introducing said gaseous blowing agent therein to form a part B composition pressurised with said blowing agent;
(f) transporting the products of steps (d) and (e) into a dynamic mixer at the predefined mixing rate and thereby mixing the part A composition pressurised with said blowing agent with the part B pressurised with said blowing agent causing foaming to form a foaming curable mixture of the part A and part B compositions therein; and
(g) dispensing the resulting curable mixture of step (f) to flow onto or into a desired target and allowing said foaming curable mixture to cure to a cured silicone foam product;

wherein the viscosity is measured at 25°C using a Brookfield™ CAP 2000+ viscometer, with spindle LV-4 (designed for viscosities in the range between 1,000-2,000,000 mPa.s) or a Brookfield™ CAP 2000+ viscometer, with spindle LV-1 (designed for viscosities in the range between 15 -20,000 mPa.s) for viscosities less than 1000 mPa.s and adapting the shear rate according to the polymer viscosity.

**2.** The method in accordance with claim 1, wherein no physical blowing agent which undergoes a liquid to gas phase change at atmospheric pressure and a temperature greater than or equal to at least 10°C, or chemical blowing agent is utilised.

**3.** The method in accordance with claim 1 or 2, wherein the blowing agent is selected from carbon dioxide, air, nitrogen or a mixture comprising two or more thereof.

**4.** The method in accordance with claim 3, wherein the blowing agent comprises carbon dioxide.

**5.** The method in accordance with any preceding claim wherein resulting foam is cured at a temperature of between room temperature and 50°C.

**6.** The method in accordance with any preceding claim wherein the curable silicone foam composition is flowable before the curable mixture completely cures to fill a large cavity i.e., a cavity in which the ratio of the largest dimension of the cavity to the diameter of the mixer outlet is greater than (>) 10 : 1, alternatively > 5 : 1, alternatively > than 3 : 1 and/or self-levelling.

**7.** The method in accordance with any preceding claim wherein the silicone foam composition dispensed during step (g) has a gel time, the time at which the gel point is reached, of greater than or equal to (≥) 120 seconds, measured using an ARES G2 rheometer from TA Instruments, equipped with a disposable aluminum 25mm diameter rotational plate with 100Pa stress used and measured at 25°C.

**8.** The method in accordance with any preceding claim wherein the dynamic mixer comprises a foam composition a dispenser head from which the resulting curable silicone foam composition is dispensed onto or into a target for which said silicone foam composition is intended.

**9.** The method in accordance with any preceding claim wherein the multiple-part silicone foam composition further comprises one or more additives selected from hydrosilylation reaction Inhibitors, Resin foam stabilizers, one or more reinforcing or non-reinforcing fillers, fire retardants, thermally conductive fillers, thermally insulative additives, pigments and/or one or more surfactants.

**10.** The method in accordance with any preceding claim wherein component (ii) of the composition, the catalyst comprises no more than 100ppm of platinum metal.

**Patentansprüche**

**1.** Kontinuierliches Verfahren zum Ausbilden eines geschäumten Silikonprodukts aus einer mehrteiligen Silikonschaumstoffzusammensetzung, umfassend die folgenden Komponenten:

i) mindestens ein Polydiorganosiloxan, das eine Viskosität von 500 bis 75.000 mPa.s bei 25 °C und mindestens

zwei ungesättigte Gruppen pro Molekül aufweist, wobei die ungesättigten Gruppen aus Alkenylgruppen, Alkinylgruppen oder einer Mischung davon ausgewählt sind;
ii) ein Organohydrogensiloxan, das mindestens zwei, alternativ mindestens drei siliziumgebundene Wasserstoffatome pro Molekül aufweist;
iii) einen Hydrosilylierungskatalysator;

wobei die mehrteilige Silikonschaumstoffzusammensetzung eine Teil-A-Zusammensetzung, umfassend die Komponenten (i) und (iii), und eine Teil-B-Zusammensetzung umfasst, umfassend die Komponenten (i) und (ii); und wobei jede der Teil-A- und Teil-B-Zusammensetzung eine Viskosität von 200 bis 50.000 mPa.s bei 25 °C aufweist; das Verfahren umfassend die Schritte

(a) Einbringen einer Teil A-Zusammensetzung und einer Teil B-Zusammensetzung in jeweilige Mischbehälter und Mischen;
(b) Transportieren der Teil-A- und Teil-B-Zusammensetzungen von Schritt (a) jeweils über ein Pumpmittel mit einer vorbestimmten Rate zu einem Abgabeventilmittel;
(c) gleichzeitiges Transportieren eines gasförmigen Treibmittels, umfassend mindestens ein nicht brennbares, inertes oder nicht brennbares und inertes Mittel, das bei 0 °C und Luftdruck gasförmig ist, über ein Gasdosierventil mit einer vorbestimmten Rate zu dem Abgabeventilmittel;
(d) Transportieren der Teil-A-Zusammensetzung durch ein erstes Abgabeventilmittel mit der vordefinierten Rate unter Einbrungen des gasförmigen Treibmittels darin, um eine Teil-A-Zusammensetzung auszubilden, die mit dem Treibmittel unter Druck gesetzt wird;
(e) gleichzeitig mit Schritt (d), Transportieren der Teil-B-Zusammensetzung durch ein zweites Abgabeventilmittel mit der vordefinierten Rate unter Einbringen des gasförmigen Treibmittels darin, um eine Teil-B-Zusammensetzung auszubilden, die mit dem Treibmittel unter Druck gesetzt wird;
(f) Transportieren der Produkte von Schritten (d) und (e) in einen dynamischen Mischer mit der vordefinierten Mischrate und dadurch Mischen der Teil-A-Zusammensetzung, die mit dem Treibmittel unter Druck gesetzt wird, mit dem Teil B, der mit dem Treibmittel unter Druck gesetzt wird, was ein Aufschäumen bewirkt, um eine schäumende aushärtbare Mischung der Teil-A- und Teil-B-Zusammensetzung darin auszubilden; und
(g) Abgeben der resultierenden aushärtbaren Mischung aus Schritt (f), um auf oder in ein gewünschtes Ziel zu fließen, und Aushärtenlassen der schäumenden aushärtbaren Mischung, um zu einem ausgehärteten Silikonschaumstoffprodukt auszuhärten;

wobei die Viskosität bei 25 °C unter Verwendung eines Brookfield™ CAP 2000+ Viskosimeters mit Spindel LV-4 (ausgelegt für Viskositäten in dem Bereich zwischen 1.000-2.000.000 mPa.s) oder eines Brookfield™ CAP 2000+ Viskosimeters mit Spindel LV-1 (ausgelegt für Viskositäten in dem Bereich zwischen 15-20.000 mPa.s) für Viskositäten von weniger als 1000 mPa.s gemessen wird und die Scherrate gemäß der Polymerviskosität angepasst wird.

**2.** Verfahren nach Anspruch 1, wobei kein physikalisches Treibmittel, das bei Luftdruck und einer Temperatur größer als oder gleich mindestens 10 °C einen Phasenübergang von flüssig zu gasförmig erfährt, oder chemisches Treibmittel genutzt wird.

**3.** Verfahren nach Anspruch 1 oder 2, wobei das Treibmittel aus Kohlendioxid, Luft, Stickstoff oder einer Mischung, umfassend zwei oder mehr davon, ausgewählt ist.

**4.** Verfahren nach Anspruch 3, wobei das Treibmittel Kohlendioxid umfasst.

**5.** Verfahren nach einem vorstehenden Anspruch, wobei der resultierende Schaumstoff bei einer Temperatur zwischen Raumtemperatur und 50 °C ausgehärtet wird.

**6.** Verfahren nach einem der vorstehenden Ansprüche, wobei die aushärtbare Silikonschaumstoffzusammensetzung fließfähig ist, bevor die aushärtbare Mischung vollständig aushärtet, um einen großen Hohlraum zu füllen, d. h. einen Hohlraum, in dem das Verhältnis der größten Abmessung des Hohlraums zu dem Durchmesser des Mischerauslasses größer als (>) 10 : 1, alternativ > 5: 1, alternativ > als 3 : 1 und/oder selbstnivellierend ist.

**7.** Verfahren nach einem der vorstehenden Ansprüche, wobei die Silikonschaumstoffzusammensetzung, die während Schritt (g) abgegeben wird, eine Gelzeit, die Zeit, zu der der Gelpunkt erreicht wird, von größer als oder gleich (≥) 120

Sekunden aufweist, gemessen unter Verwendung eines ARES G2-Rheometers von TA Instruments, ausgestattet mit einer rotierenden Einwegaluminiumplatte von 25 mm Durchmesser mit einer Spannung von 100 Pa und gemessen bei 25 °C.

**8.** Verfahren nach einem der vorstehenden Ansprüche, wobei der dynamische Mischer eine Schaumstoffzusammensetzung, einen Abgabevorrichtungskopf umfasst, aus dem die resultierende aushärtbare Silikonschaumstoffzusammensetzung auf oder in ein Ziel abgegeben wird, für das die Silikonschaumstoffzusammensetzung bestimmt ist.

**9.** Verfahren nach einem der vorstehenden Ansprüche, wobei die mehrteilige Silikonschaumstoffzusammensetzung ferner ein oder mehrere Additive umfasst, die aus Hydrosilylierungsreaktionsinhibitoren, Harzschaumstoffstabilisatoren, einem oder mehreren verstärkenden oder nicht verstärkenden Füllstoffen, Flammschutzmitteln, thermisch leitfähigen Füllstoffen, thermisch isolierenden Additiven, Pigmenten und/oder einem oder mehreren Tensiden ausgewählt sind.

**10.** Verfahren nach einem der vorstehenden Ansprüche, wobei Komponente (ii) der Zusammensetzung, der Katalysator, nicht mehr als 100 ppm Platinmetall umfasst.

## Revendications

**1.** Procédé continu permettant de former un produit en silicone expansé à partir d'une composition de mousse de silicone à plusieurs parties comprenant les composants suivants :

i) au moins un polydiorganosiloxane ayant une viscosité allant de 500 à 75 000 mPa.s à 25 °C et au moins deux groupes insaturés par molécule, lesquels groupes insaturés sont choisis parmi groupes alcényle, groupes alcynyle ou mélange de ceux-ci ;
ii) un organohydrogénosiloxane ayant au moins deux, sinon au moins trois, atomes d'hydrogène liés au silicium par molécule ;
iii) un catalyseur d'hydrosilylation ;

dans lequel la composition de mousse de silicone à plusieurs parties comprend une composition de partie A comprenant les composants (i) et (iii) et une composition de partie B comprenant les composants (i) et (ii) ; et dans lequel chacune parmi les compositions de partie A et de partie B a une viscosité allant de 200 à 50 000 mPa.s à 25 °C ; lequel procédé comprend les étapes consistant à

(a) introduire une composition de partie A et une composition de partie B dans des récipients de mélange respectifs et mélanger ;
(b) transporter les compositions de partie A et de partie B de l'étape (a) respectivement par l'intermédiaire d'un moyen de pompage à une vitesse prédéterminée vers un moyen formant soupape de distribution ;
c) transporter simultanément un agent gonflant gazeux comprenant au moins un agent non inflammable, inerte, ou non inflammable et inerte qui est gazeux à 0 °C et à la pression atmosphérique par l'intermédiaire d'une soupape de dosage de gaz à une vitesse prédéterminée vers ledit moyen formant soupape de distribution ;
(d) transporter ladite composition de partie A à travers un premier moyen formant soupape de distribution à ladite vitesse prédéfinie tout en y introduisant ledit agent gonflant gazeux pour former une composition de partie A pressurisée avec ledit agent gonflant ;
(e) simultanément avec l'étape (d), transporter ladite composition de partie B à travers un second moyen formant soupape de distribution à ladite vitesse prédéfinie tout en y introduisant ledit agent gonflant gazeux pour former une composition de partie B pressurisée avec ledit agent gonflant ;
(f) transporter les produits des étapes (d) et (e) dans un mélangeur dynamique à la vitesse de mélange prédéfinie et mélanger ainsi la composition de partie A pressurisée avec ledit agent gonflant avec la partie B pressurisée avec ledit agent gonflant, provoquant une expansion pour former un mélange durcissable en expansion des compositions de partie A et de partie B à l'intérieur de celui-ci ; et
(g) distribuer le mélange durcissable résultant de l'étape (f) pour qu'il s'écoule sur ou dans une cible souhaitée et permettre audit mélange durcissable en expansion de durcir en un produit en mousse de silicone durci ;

dans lequel la viscosité est mesurée à 25 °C à l'aide d'un viscosimètre Brookfield™CAP 2000+, avec un mobile LV-4 (conçu pour des viscosités dans la plage comprise entre 1 000 et 2 000 000 mPa.s) ou un viscosimètre Brookfield™ CAP 2000+, avec un mobile LV-1 (conçu pour des viscosités dans la plage comprise entre 15 et 20 000 mPa.s) pour les viscosités inférieures à 1 000 mPa.s et l'adaptation du taux de cisaillement en fonction de la viscosité du polymère.

**2.** Procédé selon la revendication 1, dans lequel ni agent gonflant physique qui subit un changement de phase liquide à gazeuse à la pression atmosphérique et à une température supérieure ou égale à au moins 10 °C, ni agent gonflant chimique n'est utilisé.

**3.** Procédé selon la revendication 1 ou 2, dans lequel l'agent gonflant est choisi parmi dioxyde de carbone, air, azote ou mélange comprenant deux de ceux-ci ou plus.

**4.** Procédé selon la revendication 3, dans lequel l'agent gonflant comprend du dioxyde de carbone.

**5.** Procédé selon l'une quelconque revendication précédente, dans lequel la mousse résultante est durcie à une température comprise entre la température ambiante et 50 °C.

**6.** Procédé selon l'une quelconque revendication précédente, dans lequel la composition de mousse de silicone durcissable est fluide avant que le mélange durcissable ne durcisse complètement pour remplir une grande cavité, c'est-à-dire, une cavité dans laquelle le rapport entre la plus grande dimension de la cavité et le diamètre de la sortie de mélangeur est supérieur à (>) 10:1, alternativement > 5:1, alternativement > 3:1 et/ou s'ajuste seul.

**7.** Procédé selon l'une quelconque revendication précédente, dans lequel la composition de mousse de silicone distribuée pendant l'étape (g) a un temps de gel, le temps auquel le point de gel est atteint, supérieur ou égal à (≥) 120 secondes, mesuré à l'aide d'un rhéomètre ARES G2 de TA Instruments, équipé d'une plaque rotative en aluminium jetable de 25 mm de diamètre avec utilisation d'une contrainte de 100 Pa et mesuré à 25 °C.

**8.** Procédé selon l'une quelconque revendication précédente, dans lequel le mélangeur dynamique comprend une composition de mousse, une tête de distributeur à partir de laquelle la composition de mousse de silicone durcissable résultante est distribuée sur ou dans une cible à laquelle ladite composition de mousse de silicone est destinée.

**9.** Procédé selon l'une quelconque revendication précédente, dans lequel la composition de mousse de silicone à plusieurs parties comprend en outre un ou plusieurs additifs choisis parmi inhibiteurs de réaction d'hydrosilylation, agents stabilisants de mousse de résine, une ou plusieurs charges renforçantes ou non renforçantes, produits ignifuges, charges thermoconductrices, additifs thermiquement isolants, pigments et/ou un ou plusieurs tensioactifs.

**10.** Procédé selon l'une quelconque revendication précédente, dans lequel le composant (ii) de la composition, le catalyseur ne comprend pas plus de 100 ppm de métal du groupe du platine.

Fig. 1

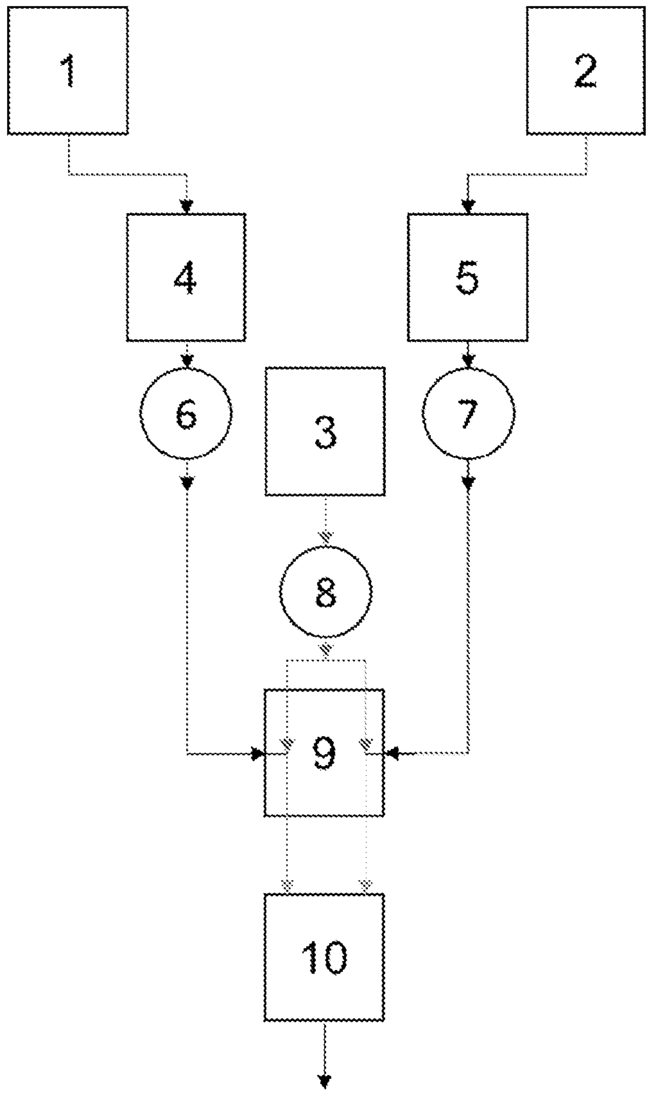

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2020028299 A1
- US 5574073 A
- US 5744507 A
- US 5436274 A
- EP 0691365 A
- US 3419593 A
- US 6605734 B
- US 3715334 A
- US 3814730 A
- US 3989667 A
- US 3445420 A


### Non-patent literature cited in the description


- **WALTER NOLL**. Chemistry and Technology of Silicones. 1962, 1-9